# EUROPEAN PATENT APPLICATION

(11) **EP 1 873 763 A1**
(43) Date of publication of application: **02.01.2008**
(21) Application number: 07012368.2
(22) Date of filing: 25.06.2007
(51) Int. Cl.: G11B 7/0037, G11B 23/40

(54) **Optical disk image drawing method and optical disk apparatus, and optical disk recording medium**

(30) Priority: 26.06.2006 JP 2006175824
(71) Applicant: YAMAHA CORPORATION, Naka-ku Hamamatsu-shi Shizuoka-ken (JP)
(72) Inventor: Itoga, Hisanora, Hamamatsu-shi Shizuoka (JP); Fushiki, Tatsuo, Hamamatsu-shi Shizuoka (JP); Yamada, Seiya, Hamamatsu-shi Shizuoka (JP)
(74) Representative: Wagner, Karl H.

(57) **Abstract**

A data recording layer and an image drawing layer are disposed in an optical disk. Optical pickups are disposed on opposite sides of this optical disk, respectively. One of the optical pickups records data on the data recording layer. The other optical pickup forms a visible image on the image drawing layer. The one of the optical pickups detects a predetermined rotation reference position from the optical disk before an image drawing operation on the image drawing layer by the other optical pickup. An orientation of the visible image is set on the basis of the detected rotation reference position to form the visible image on the image drawing layer.

## Description

BACKGROUND OF THE INVENTION
The present invention relates to a method and apparatus for forming (or drawing) a visible image, such as a picture or a character, on a surface of an optical disk, and to an optical disk medium that can be used for performing the method for drawing a visible image thereon. More particularly, the present invention relates to a technique enabling the drawing of a visible image on a surface of an optical disk without inverting the front and rear sides of the optical disk, which have been set when data is recorded thereon.

JP-A-2002-203321 discloses a technique of forming an image drawing layer constituted by, for example, a thermosensitive layer or a photosensitive layer, on a surface of an optical disk, such as a recordable CD or DVD, and of using an optical disk recording apparatus configured to record data on a data recording layer of the optical disk, also as an apparatus for drawing a visible image on a surface of the optical disk, to draw a visible image on the image drawing layer by irradiating laser beam modulated according to image data onto the image drawing layer from an optical pickup.

According to the method for drawing a visible image, which is described in JP-A-2002-203321, when a visible image is drawn on an optical disk, the optical disk should be once ejected from an optical disk apparatus. Then, the optical disk should be again inserted into the optical disk apparatus by inverting the front and rear sides of the optical disk. Therefore, it is cumbersome to operate the optical disk apparatus.

SUMMARY OF THE INVENTION
An object of the invention is to solve the drawback of the conventional technique and to enable the drawing of a visible image on a surface of an optical disk without inverting the front and rear sides of the optical disk, which have been set when data is recorded thereon.

To achieve the foregoing object, according to an aspect of the invention, there is provided An optical disk image drawing method of forming a visible image on an optical disk by an optical disk apparatus, the optical disk including a data recording layer and an image drawing layer formed on the data recording layer , the method comprising:
providing first and second optical pickups in the optical disk apparatus, and respectively disposed above and below the optical disk where the optical disk is stored in the optical disk apparatus, the first and second optical pickups are set to be in a fixed positional relation therebetween with respect to a rotating direction of the optical disk, the first optical pickup being capable of recording/reading data is recorded on/from the data recording layer, and the second optical pickup being capable of forming a visible image on the image drawing layer;
rotating the optical disk:
detecting a predetermined rotation reference position from the rotated optical disk by the first optical pickup before an image drawing operation on the image drawing layer is started by the second optical pickup; and
forming the visible image on the image drawing layer by the second optical pickup on the basis of the detected rotation reference position,

According to this method for drawing the visible image on the optical disk of the invention, the optical pickups are respectively disposed above and below the optical disk by being stacked. Data is recorded on the data recording layer by the first optical pickups, while a visible image is drawn on the image drawing layer by the second optical pickup. Consequently, the visible image can be drawn on a surface of the optical disk without inverting the front and rear sides of the optical disk, which have been set when data is recorded thereon. The predetermined rotation reference position is detected from the optical disk by the first optical pickups before the image drawing operation on the image drawing layer is started. Additionally, the other optical pickup forms the visible image on the basis of the detected rotation reference position. Thus, the visible image can be formed in the direction of the predetermined rotation direction portion of the optical disk. Consequently, for example, in a case where an optical disk is ejected from the optical disk apparatus after a visible image is drawn on the optical disk, and subsequently, the optical disk is again inserted into the optical disk apparatus in order to perform the drawing of an additional visible image (e.g., splice-writing or overwriting is performed) thereon, the drawing of an additional visible image can be achieved by setting the orientation of the additional visible Image to that of a visible image previously formed thereon. Additionally, even in a case other than the additional drawing, the image drawing can be performed by setting the orientation of the visible image exactly or substantially to that of a character or a graphic previously printed on a part of a label surface. Also, according to the invention, since the rotation reference position is detected from the data surface side of the optical disk, this eliminates the necessity for recording information on the rotation reference position on the image drawing side of the optical disk. Thus, a larger image drawing area can be assured, for that.

According to one aspect of the method of drawing a visible image according to the invention, an image drawing operation can be started from a position in the rotating direction having a predetermined positional relationship with the detected rotation reference position. According to the aspect, the method of drawing the visible image is adapted so that the optical disk is rotated by a spindle motor at a predetermined constant angular velocity before the operation of forming the visible image on the image drawing layer; timing, with which an FG pulse is generated from the spindle motor and which is adjacent to timing with which the rotation reference position is detected by the first optical pickups is detected; and the operation of forming the visible image is started from timing with which the FG pulse is generated or from timing having a predetermined temporal relationship with the timing with which the FG pulse is generated, in a state in which the timing, with which the FG pulse is generated from the spindle motor and which is adjacent to the timing with which the rotation reference position is detected by the first optical pickups by counting the FG pulses and in which the optical disk is rotated at the predetermined constant angular velocity.

Also, according to another aspect of the method of the invention, the method of drawing a visible image includes the steps of:
rotating the optical disk by a spindle motor at a predetermined constant angular velocity before the operation of forming the visible image;
detecting FG pulse generating timing of generating an FG pulse from the spindle motor, the FG pulse generating timing being adjacent to reference position detecting timing of detecting the rotation reference position by the first optical pickup; and
starting the operation of forming the visible image from the FG pulse generating timing or from timing having a predetermined temporal relationship with the FG pulse generating timing, in a state in which the FG pulse generating timing is detected by the first optical pickup by counting the FG pulses and the optical disk is rotated at the predetermined constant angular velocity.

According to another aspect of the method of the invention, the method of drawing a visible image is adapted so that the rotation reference position is defined by position information which is represented by one of ATIP and a subcode in a case where a data recording format of the data recording layer is a CD format, and that the rotation reference position is defined by position information which is represented by one of ATIP, a land pre-pit, and an ECC block in a case where a data recording format of the data recording layer is a DVD format.

Also, according to another aspect of the method of the invention, the method of drawing a visible image is adapted so that formation of the visible image on the image drawing layer of the optical disk can be permitted on condition that predetermined disk identifying information of allowing image drawing is detected from the data recording layer of the optical disk by the first optical pickups. In this case, the disk identifying information of allowing image drawing can be described by, for example, a subcode, main data, a specific CRC error occurrence pattern, ATIP information, and ADIP information. Thus, the disk identifying information of allowing image drawing is recorded in the data recording layer of the optical disk. Consequently, there is no need for recording disk identifying information of allowing image drawing on the image drawing surface side of the optical disk. Accordingly, a larger image drawing area can be assured for that.

Additionally, according to another aspect of the method of the invention, the method of drawing a visible image is adapted so that the formation of the visible image on the image drawing layer of the optical disk is permitted on condition that a disk identifying mark of allowing image drawing, formed on a disk substrate surface of a side of the optical disk, on which the data recording layer, is disposed, or formed in an region of the data recording layer, which is more inward than a data recording region, is detected by the first optical pickups. Consequently, the disk identifying mark of allowing image drawing is formed on the disk substrate surface of the side of the optical disk, on which the data recording layer is disposed, or formed in the data recording layer. Accordingly, there is no necessity for recording disk identifying information of allowing image drawing on the image drawing surface side of the optical disk. Consequently, a larger image drawing area can be assured for that.

According to another aspect of the invention, there is provided an optical disk apparatus for.forming a visible image on an optical disk that includes a data recording layer and an image drawing layer laminated on the data recording layer, the optical disk apparatus comprising:
first and second optical pickups to be respectively disposed above and below the optical disk, the optical pickups being set to be in a fixed positional relation therebetween with respect to a rotating direction of the optical disk,
wherein the first optical pickup records data on the data recording layer or reads recorded data from the data recording layer and the second optical pickup simultaneously or nonsimultaneously forms a visible image on the image drawing layer in a state in which the optical disk is rotationally driven,
wherein the first optical pickup detects a predetermined rotation reference position from the optical disk before an image drawing operation on the image drawing layer is started, and
wherein the second optical pickup forms the visible image on the image drawing layer by setting an orientation of the visible image on the basis of the detected rotation reference position.

According to another aspect of the invention, there is provided An optical disk recording medium comprising:
a data recording layer;
an image drawing layer disposed on the data recording layer; and
a disk identifying mark, which allows an image drawing, formed in an area in an inner periphery side from a data recording area on a disk substrate surface that the data recording layer of the optical disk is arranged, or on the data recording layer, wherein the disk identifying mark is be detected by an optical pickup disposed to face the disk substrate surface.

[0076]

BRIEF DESCRIPTION OF THE DRAWINGS
FIG. 1 is a block diagram illustrating the system configuration of an optical disk apparatus to which the invention is applied, that is, a first embodiment of the invention.
FIG. 2 is a partially enlarged cross-sectional view illustrating an example of the positional relation between the layer structure of an optical disk 12 shown in FIGS. 1 and 16 and laser beam.
FIG. 3 is a partially enlarged cross-sectional view illustrating another example of the positional relation between the layer structure of the optical disk 12 shown in FIGS. 1 and 16 and laser beam.
FIG. 4 is a partially enlarged cross-sectional view illustrating still another example of the positional relation between the layer structure of the optical disk 12 shown in FIGS. 1 and 16 and laser beam.
FIG. 5 is a schematic view illustrating the arrangement of pixels of a single visible image drawn on an image drawing layer 44 of the optical disk 12.
FIG. 6 is a waveform chart illustrating change in the laser power of image drawing laser beam 30 used for drawing a visible image on the image drawing layer 44 of the optical disk 12.
FIG. 7 is a flowchart illustrating control operations of an optical disk apparatus 10 shown in FIG. 1 at the recording of data on the optical disk 12 and at the drawing of a visible image thereon.
FIG. 8 is a schematic view illustrating an example of setting a rotation reference position in a data surface 12a of the optical disk 12.
FIGS. 9A and 9B are schematic view illustrating an example of setting a reference angle line 12a of the optical disk 12.
FIG. 10 is a plan view illustrating an example of a visible image 91 that is drawn on the image drawing layer 44 of the optical disk 12 by performing the control operation illustrated in FIG. 7.
FIG. 11 is a flowchart illustrating control operations of the optical disk apparatus 10 shown in FIG. 1 at the recording of data on the optical disk 12 and at the drawing of a visible image thereon, and also illustrating a technique of reducing the deviation of the orientation of the drawn visible image with respect to that of the reference angle line 106.
FIG. 12 is a flowchart illustrating the details of a process of "detecting a reference angle line", which is performed in step S25 shown in FIG. 11.
FIG. 13 is a time chart illustrating an operation controlled as illustrated in FIG. 12,
FIG. 14 is a flowchart illustrating the details of a process of "drawing a visible image from the reference angle line", which is performed in step S27 shown in FIG. 11.
FIG. 15 is a time chart illustrating an operation controlled as illustrated in FIG. 14.
FIG. 16 is a block diagram illustrating the system configuration of an optical disk apparatus to which the invention is applied, that is, a second embodiment of the invention.
FIG. 17 is a flowchart illustrating a control operation in a case where an optical disk apparatus 111 shown in FIG. 16 is used, where data recording is performed on an optical disk 12 by a lower optical pickup 16, and where an image drawing operation is simultaneously performed by an upper optical pickup 18.
FIG. 18 is a diagram illustrating the data structure of ATIP in the case of a CD format.
FIG. 19 is a diagram illustrating the data structure of a subcode in the case of the CD format.
FIG. 20 is a table illustrating an example of the definition of disk identifying information of allowing image drawing according to the subcode in the case of the CD format.
FIG. 21 is a diagram illustrating the structure of data of 1 sector according to the CD format.
FIG. 22 is a table illustrating an example of the definition of disk identifying information of allowing image drawing according to main data in the case of the CD format.
FIG. 23 is a table illustrating an example of the definition of disk identifying information of allowing image drawing according to a CRC error occurrence pattern in the case of the CD format.
FIG. 24 is a diagram illustrating the data structure of ATIP in the case of a (DVD + R(W)) format.
FIG. 25 is a flowchart illustrating a technique employed by the optical disk apparatuses 10 and 111 to determine, in a case where disk identifying information of allowing image drawing is recorded on a data recording layer, whether a visible image can be drawn on an optical disk.
FIGS. 26A and 26B are diagrams illustrating examples of forming of a disk identifying mark of allowing image drawing on the optical disk 12.
FIG. 27 is a flowchart illustrating a technique employed by the optical disk apparatuses 10 and 111 to determine, in a case where a disk identifying mark 113 of allowing image drawing is recorded on a data recording layer, whether a visible image can be drawn on an optical disk.

DETAILED DESCRIPTION OF PREFERRED EMBODIMENTS

### First Embodiment

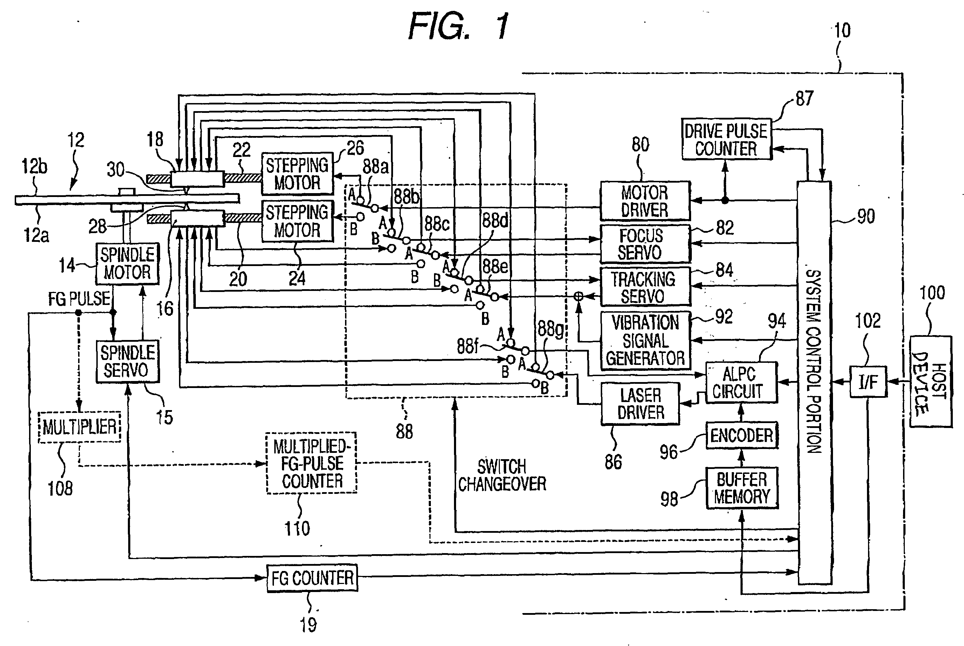

A first embodiment of the invention is described below. FIG. 1 illustrates a system configuration of an optical disk apparatus to which the invention is applied. The optical disk apparatus 10 has a configuration in which optical pickups 16 and 18 are disposed on both sides of an optical disk 12. According to the kind of the optical disk 12, the optical disk apparatus can operate in the following modes.
(a) In a case where the optical disk 12 is a single-sided disk, data recording or data reproduction is performed by the optical pickup 16 or 18 (in a case where the optical disk 12 is a playback-only disk, only data reproduction is performed).
(b) In a case where the optical disk 12 is a double-sided disk, data recording or data reproduction is performed by the optical pickup 16 or 18 (in a case where the optical disk 12 is a playback-only disk, only data reproduction is performed) (The optical pickups 16 and 18 do not operate simultaneously).
(c) In a case where the optical disk 12 is a single-sided disk with an image drawing layer, data recording or data reproduction is performed by the optical pickup 16, while a visible image is drawn by the optical pickup 18 (the optical pickups 16 and 18 operate at different times, respectively).

The following description of the present embodiment describes a case where a single-sided disk with an image drawing layer is used as the optical disk 12, data recording is performed by the optical pickup 16, and image drawing is performed by the optical pickup 18, In the optical disk 12, a data recording layer on which data is recorded and reproduced, and an image drawing layer on which the formation of a visible image is performed, are stacked and disposed at different positions in a thickness direction of the optical disk 12. The image drawing layer is adapted so that visible light characteristics are changed by irradiating laser beam thereon. The image drawing layer is made of a heat-sensitive material and a light-sensitive material. The image drawing layer can be made of a dye material which is the same as that of the data recording layer. In the data recording layer, a wobble-group is formed as a track. In this embodiment, it is assumed that the data recording layer is disposed on the bottom surface side of the optical disk 12, and the image drawing layer is disposed on the top surface side of the optical disk 12. Hereunder, the bottom surface 12a and the top surface 12b of the optical disk 12 are referred to as a data surface and a label surface, respectively. Recording data is recorded on the data recording layer so that data density in the circumference direction of the disk is constant independent of the radial position of the disk. Additionally, it is assumed that image drawing is performed so that the number of pixels per round of the circumference of the disk is constant independent of the radial position of the disk.

The optical disk 12 is rotationally driven by a spindle motor 14. A spindle servo 15 controls the rotation of the spindle motor 14 according to a command issued from a system control portion (or microcomputer) 90. The spindle motor 14 undergoes a CLV (Constant Linear Velocity) control operation or a CAV (Constant Angular Velocity) control operation when data is recorded. Also, the spindle motor 14 undergoes a CAV control operation when a visible image is drawn. The spindle motor 14 outputs FG (frequency generator) pulses of the predetermined number per revolution at uniform angular intervals. An FG counter 19 counts FG pulses.

The optical pickups 16 and 18 are disposed on both sides of the optical disk 12, respectively. The lower optical pickup 16 performs data-recording and data-reproduction on the data recording layer. The upper optical pickup 18 performs image drawing on the image drawing layer. The lower optical pickup 16 is supported by a feed screw 20 which is placed in parallel to the surface of the optical disk 12 and is fixedly disposed along a radial direction of the disk 12 (directed in the direction of the central axis of the disk 12). The feed screw 20 is rotationally driven around the axis of the screw by a stepping motor 24 to transport the lower optical pickup 16 in the radial direction of the disk 12. The upper optical pickup 18 is supported by a feed screw 22 which is placed in parallel to the surface of the optical disk 12 and is fixedly disposed along the radial direction of the disk 12 (directed in the direction of the central axis of the disk 12). The feed screw 22 is rotationally driven around the axis of the screw by a stepping motor 26 to transport the lower optical pickup 16 in the radial direction of the disk 12. Both the optical pickups 16 and 18 are transported in the radial direction of the disk 12 individually independent of each other. Both the data-recording and the image drawing are performed from the inner circumference side toward the outer circumference side of the optical disk 12.

The positions of the optical pickups 16 and 18 in the circumference direction of the disk are fixed. In the present embodiment, the optical pickups 16 and 18 are disposed at the same position in the circumference direction of the disk (i.e., the feed screws 20 and 22 are disposed at the same position in the circumference direction of the disk and extend in parallel to each other in an up-down direction). Incidentally, the optical pickups 16 and 18 can be disposed by being shifted from each other in the direction of the circumference of the disk (i.e., the feed screws 20 and 22 can be disposed at an angle in the direction of the circumference of the disk). In either case, the relation in the position in the circumference direction of the disk between the optical pickups 16 and 18 is fixed.

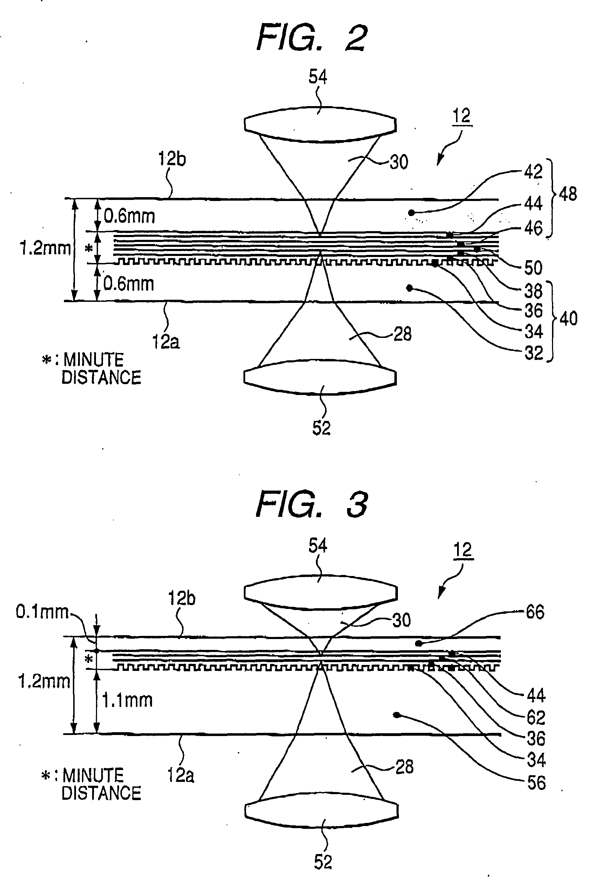

Examples of the positional relation between the layer structure of the optical disk 12 and each of the optical pickups 16 and 18, which output laser beam, are described below with reference to FIGS. 2, 3, and 4. Incidentally, for convenience of description to be described later, same reference numerals are used to designate a part of corresponding portions in FIGS. 2, 3, and 4.

<First Example of Positional Relation between Layer and each of Optical Pickups Outputting Laser beam (FIG. 2)>
In the case of the example shown in FIG. 2, each of the optical pickups 16 and 18 is constituted by an optical pickup for both DVD reproducing and playback. The optical disk apparatus 10 is constituted as a DVD recording/reproducing apparatus capable of continuously recording and reproducing data on and from both sides of a DVD disk. An image-drawing function according to the invention is added to the optical disk apparatus 10. The optical disk 12 is constituted as an image drawable single-sided DVD-R disk with a single layer. Thus, the optical disk 12 comprises a first substrate 40 in which a coloring matter layer serving as a data recording layer 36 and a reflection layer 38 are serially stacked on a surface, on which a groove 34 is formed, of a 0.6mm-thick polycarbonate substrate 32, and a second substrate 48 in which a coloring matter layer serving as an image drawing layer 44 and a reflection layer 46 are serially stacked on a surface of a 0.6mm-thick polycarbonate substrate 42 which has no groove. The stacked layer film of the first substrate 40 and that of the second substrate 48 are opposed to each other and adhered together with an adhesion layer 50 to unite the first substrate 40 and the second substrate 48, so that the entire thickness of the united substrates is 1.2 mm. Laser beam 28 for DVD, which is output from an objective lens 52 of the lower optical pickup 16, is controlled to be focused onto the data recording layer 36. Laser beam 30 for DVD, which is output from an objective lens 54 of the upper optical pickup 18, is controlled to be focused onto the image drawing layer 44.
Incidentally, both the pickups 16 and 18 may have a recording/reproducing function for HD-DVD in addition to the recording/reproducing function for DVD.

<Second Example of Positional Relation between Layer and each of Optical Pickups Outputting Laser beam (FIG. 3)>
In the case of the example shown in FIG. 3, the optical pickup 16 is constituted by an optical pickup for both CD reproducing and playback. The optical pickup 18 is constituted by an optical pickup for both BD (Blue-ray Disk) reproducing and playback. The optical disk apparatus 10 is constituted as an apparatus for both CD recording and reproduction and for both BD recording and reproduction. The image-drawing function according to the invention is added to the optical disk apparatus 10, The optical disk 12 is constituted as an image drawable CD-R disk. Thus, the optical disk 12 is constituted so that a coloring matter layer serving as a data recording layer 36, a reflection layer 62, a coloring matter layer serving as an image drawing layer 44, and a 0.1mm-thick protection layer 66 are serially stacked on a surface, on which a groove 34 is formed, of a 1.1 mm-thick polycarbonate substrate 56, thereby the entire thickness of the united substrates is 1.2 mm. The position of the data recording layer 36 is shifted by 0.1 mm from the position thereof of a standard CD-R. However, CD standards provide that the thickness of a transparent substrate is 1.2±0.1 mm. Consequently, data can be recorded and reproduced without problems. Laser beam 28 for CD, which is output from an objective lens 52 of the lower optical pickup 16, is controlled to be focused onto the data recording layer 36. Laser beam 30 for BD, which is output from an objective lens 54 of the upper optical pickup 18, is controlled to be focused onto the image drawing layer 44.

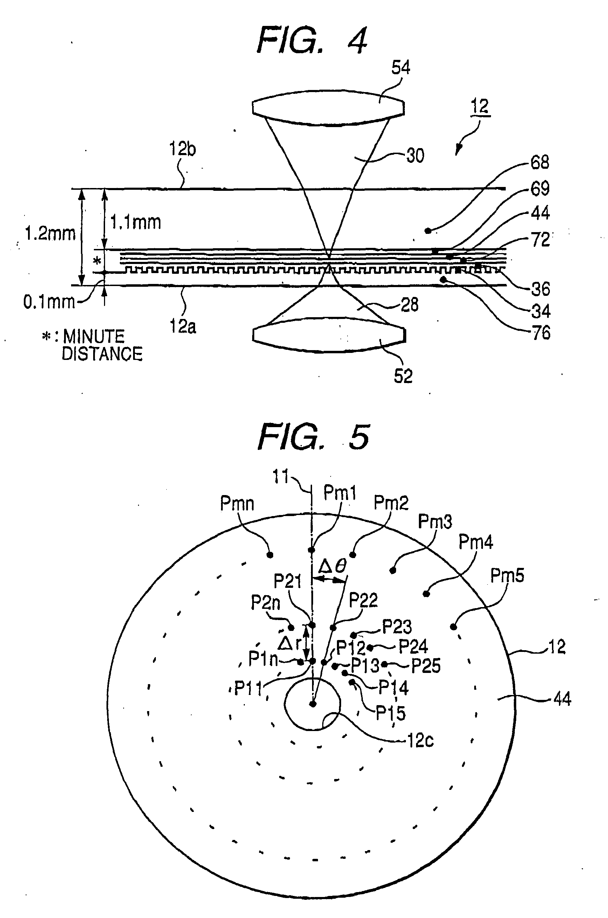

<Third Example of Positional Relation between Layer and each of Optical Pickups Outputting Laser beam (FIG. 4)>
In the case of the example shown in FIG. 4, the optical pickup 16 is constituted by an optical pickup for both BD reproducing and playback. The optical pickup 18 is constituted by an optical pickup for both CD reproducing and playback. The optical disk apparatus 10 is constituted as an apparatus for both BD recording and reproduction and for both CD recording and reproduction, similarly to the example shown in FIG. 3. The image-drawing function according to the invention is added to the optical disk apparatus 10. The optical disk 12 is constituted as an image drawable CD-R disk. That is, the optical disk 12 employs a 1.1 mm-thick polycarbonate protection sheet 76, in which a groove 34 is formed, and is obtained by serially stacking a coloring matter layer serving as a data recording layer 36, a reflection layer 72, and a coloring matter layer serving as an image drawing layer 44 on a surface, on which the groove 34 is formed, of a 0.1mm-thick protection sheet 76. A 1.1mm-thick polycarbonate substrate 68 having no groove is disposed to face the image drawing layer 44 of the protection sheet 76. The protection sheet 76 and the substrate 68 are adhered together with an adhesion layer 69 to be united. Laser beam 28 for BD, which is output from an objective lens 52 of the lower optical pickup 16, is controlled to be focused onto the data recording layer 36. Laser beam 30 for CD, which is output from an objective lens 54 of the upper optical pickup 18, is controlled to be focused onto the image drawing layer 44.

### <Fourth Example of Positional Relation between Layer and each of Optical Pickups Outputting Laser beam>

In the positional relation between layer and each of optical pickups In the first to third examples, distance from the label surface 12b to the image drawing layer 44 is different depending on the kind of the disk. Thus, in the fourth example, both the pickups disposed above and below the optical disk have a recording/reproducing function for BD, DVD and CD in order to perform the image drawing operation for the all kinds of the optical disk. With this arrangement, the laser beam can be focused on the image drawing layer which is arranged at either surface side of the optical disk and on the image drawing layer which is arranged at any depth of the optical disk from the disk surface. Therefore, the visible image can be formed in any kind of disks of the above first to the third examples. That is, after the optical disk is inserted in to the optical disk apparatus, by judging whether the image drawing layer exists and judging the kind of the image drawing layer and judging which side the image drawing layer is arranged if the image drawing layer exists, the visible image can be formed on the image drawing layer by selecting the suitable laser beam according to the judged layer structure (according to the distance from the pickup facing the label surface to the image drawing layer) and by performing the image drawing control according to the selected laser beam.

<Structure and operation of optical disk apparatus 10>
As illustrated in FIG. 1, a motor driver 80, a focus servo 82, a tracking servo 84, and a laser driver 86 are used by being switched between the optical pickups 16 and 18. A selection switch 88 performs this switching operation. According to a command from a system control portion 90, all of switches 88a to 88g of the selection switch 88 are connected to a contact point B when the optical pickup 16 is operated. All the switches 88a to 88g of the selection switch 88 are connected to a contact point A when the optical pickup 18 is operated.

The motor driver 80 applies drive pulses to the stepping motors 24 and 26 to transfer the optical pickups 16 and 18 in a radial direction of the disk by a moving distance corresponding to the number of the drive pulses. A drive pulse counter 87 performs the up-down count of the number of drive pulses applied to the stepping motor 26 according to the drive direction when a visible image is drawn. Thus, the moving distance of the optical pickup 18 in the radial direction is measured. Incidentally, both of the FG counter 19 and the drive pulse counter 87 can be implemented by software counters installed in the system control portion 90. The focus servo 82 performs a focus control on the optical pickups 16 and 18. The tracking servo 84 performs a tracking control on the optical pickups 16 and 18. Incidentally, when a visible image is drawn, the tracking control to be performed on the optical pickup 18 by the tracking servo 84 is turned off, because there are no tracks (or grooves) in the image drawing layer of the optical disk 12, so that the optical pickup 18 cannot perform the tracking control. Instead, the optical pickup 18 is sequentially transferred in the radial direction of the disk by being driven by the stepping motor 26 synchronized with the rotation of the optical disk 12. At that time, the position in the disk radial direction of the optical pickup 18 is detected by performing the up-down count of the number of the drive pulses for the stepping motor 26 according to the rotating direction, which are counted from the inner-circumference-side origin position (e.g., a position at which the movement of the optical pickup 18 in the direction of the inner circumference of the disk is mechanically stopped by a stopper) of the optical pickup 18 by the drive pulse counter 87.

A vibration signal generator 92 generates a vibration signal when a visible image is drawn and supplies the vibration signal to a tracking actuator of the optical pickup 18 to vibrate the objective lens 54 (see FIGS. 2, 3, and 4), thereby making laser beam 30 to cause microvibrations in the radial direction of the optical disk 12. The laser beam 30 moves in the direction of the circumference of the disk with rotation of the disk, while the laser light 30 meanders on the image drawing layer 44 by the vibration operation. Further, the laser beam 30 travels at the same radial position around the center point of the disk in a plurality of times and sequentially moves the optical pickup 18 at micro-pitches in the direction of the outer circumference of the disk to perform the image drawing. Therefore, a visible image can be formed so that interspaces in the radial direction are small.

The laser driver 86 drives laser diodes (not shown) provided in the optical pickups 16 and 18. An ALPC (Automatic Laser Power Control) circuit 94 controls the power of each of laser beam rays 28 and 30 respectively output from the optical pickups 16 and 18 to have a value designated by a command issued from the system control portion 90.

When data is recorded, an encoder 96 encodes recording data into a predetermined format. The laser driver 86 modulates laser beam 28 output from the optical pickup 16 according to the encoded recording data. The encoded recording data is recorded on the data recording layer 36 of the optical disk 12 as pits representing the data. When a visible image is drawn, the encoder 96 generates a pulse signal (i.e., an image drawing pulse) whose duty factor changes according to tone data corresponding to each of pixels represented by image data. The laser driver 86 modulates laser beam 30 outputs from the optical pickup 18 according to the pulse signal whose duty factor changes. Also, the laser driver 86 changes the visible light characteristics of the image drawing layer 44 of the optical disk 12. Each single pixel of the drawn visible image is recognized by human eyes as one point (or dot). The difference in duty factor corresponding to each dot among pixels is felt by human eyes as that in density level used for drawing (the higher the duty factor of each pixel becomes, the visible image is felt as a high-density image). Consequently, the image drawing can be realized by monochromatic multi-gradation.

The host device (or host computer) 100 transmits recording data when the data is recorded. The host device 100 transmits image data to the optical disk apparatus 10 when a visible image is drawn. The transmitted recording data or image data is received by an interface 102 of the optical disk apparatus 10, and the received data is once stored in a buffer memory 98. Subsequently, the data is read from the buffer memory 98 and is supplied to the encoder 96 which performs the above encoding process on the data. The encoded data is provided for data-recording or image-drawing. When the data is reproduced, data reproduced by a decoder (not shown) is transferred to the host device 10 through the interface 102. The host device 100 transmits a command issued by an operator to the optical disk apparatus 100 when data-recording, data-reproduction, or image-drawing is performed. This command is transmitted to a system control portion 90 through the interface 102. The system control portion 90 sends an instruction corresponding to the command to each of circuits of the optical disk apparatus 10 and causes each of the circuits to perform a corresponding operation.

An arrangement of pixels of a single visible image drawn on the visible image layer 44 of the optical disk 12 according to the present embodiment is described below. FIG. 5 schematically illustrates the arrangement of pixels (incidentally, the meandering due to the aforementioned vibration operation is not taken into consideration). Reference numeral 12c designates a center hole. Pixels P11, P12, ..., Pmn are concentrically arranged around the central point of the optical disk 12. A radial arrangement interval Δr, at which the pixels are arranged, is constant. The circumferential arrangement (angular) interval Δθ is constant. Therefore, the number of pixels per round of the circumference of the optical disk is constant, regardless of the radial positions of the pixels. An imaginary half line extending in a radial direction of the optical disk 12 is defined to be an image reference angle line 11. Pixels disposed like a circle at each radial position are arranged in the direction of the circumference of the optical disk by employing an associated one of the pixels P11, P21, ..., Pm1 on the image reference angle line 11 as a leading pixel.

The image-drawing using laser beam 30 is sequentially performed from the inner circumference side to the outer circumference side by performing a CAV (Constant Angular Velocity) control. That is, the image-drawing is started from the leading pixel P11 of the pixels placed on the innermost circumference. Subsequently, an image drawing process proceeds by sequentially starting performing the image drawing on the innermost circle on which the pixels are arranged, from the pixels P12, P13, ..., to the pixel P1n. Immediately after the last pixel P1n arranged on the innermost circle is drawn (alternatively, in the case where the visible image processing is performed by causing laser beam 30 to travel at the same radial position around the center point a plurality of times (i.e., k times), every k-times of traveling-around of laser beam), the optical pickup 16 is outwardly radially moved in the direction of the outer circle by a distance Δr. Then, the image drawing is performed on the pixels P21, P22, ..., P2n to the pixel P2n. Subsequently, the image drawing process proceeds so that the optical pickup 16 is moved at a position just anterior to the image reference angle line 11 in the direction of an outer circumference by the distance Δr, every time the laser beam 30 travels therearound by one-round (or k-rounds) of the circumference. When the image drawing is performed on the last pixel Pmn arranged on the outermost circumference, the whole process is finished. Thus, the image drawing is continuously performed by sequentially moving the optical pickup at a position just anterior to the image reference angle line 11 in the direction of the outer circumference side. Consequently, the image drawing process is completed by performing the image drawing processing on the pixels arranged on m-rounds of the circumferences of the coaxial circles (or kx m-rounds thereof). In this case, the optical disk 12 is rotated by performing the CAV control operation, and the image drawing processing is performed by encoding data representing each pixel (or tone data) at a constant rate in synchronization with the rotation of the optical disk 12 (i.e., generating a pulse signal (or a image drawing pulse) having a predetermined cycle (corresponding to an angle Δθ that corresponds to one pixel), in which the duty factor changes according to the tone data). Thus, pixels P12, P13, ..., Pmn subsequent to a leading pixel P11 of the visible image are automatically drawn at predetermined positions only by adjusting the processing timing so that the leading pixel P11 is drawn on the image reference angle line 11.

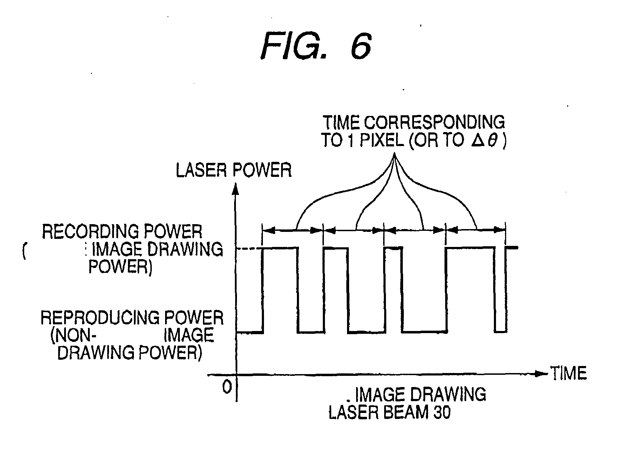

When a visible image is drawn, the power of image-drawing laser beam changes, as illustrated in, for example, FIG, 6. That is, the laser beam 30 takes binary values of reproducing power (non-image drawing power) and recording power (image drawing power) at a duty factor which is constant during a period in which drawing period for one pixel corresponds to an angle Δθ for one pixel and which varies according to the tone data corresponding to each pixel. The visible light characteristics of the image drawing layer 44 are changed by the recording power to thereby perform the image drawing. When the value of the power of the laser beam 30 has that of the reproducing power, a focus error is detected. Thus, a focus control is performed according to the detected focus error. FIG. 6 is illustrated by assuming, for simplification of description, that the number of image drawing pulses corresponding to one pixel is 1. However, actually, as described in JP-A-2004-355764 corresponding to Japanese Patent Application applied by the Applicant of the present Application, the image drawing pulse is constituted by EFM (Eight-to-Fourteen Modulation) signals each having a shorter cycle. Thus, the image drawing can be performed by using a plurality of pulses for one pixel. In this case, in each of time periods shown in FIG. 6, laser beam is modulated by the EFM signals (the image drawing pulse is divided into shorter division pulses). However, since the average duty factor of the EFM signal is 50% and is constant, the duty factor of the image drawing pulse per pixel (a total of duty factors of the division pulses) has a value that corresponds to the tone data corresponding to each pixel. Consequently, the image drawing can be achieved according to tone data corresponding to each pixel.

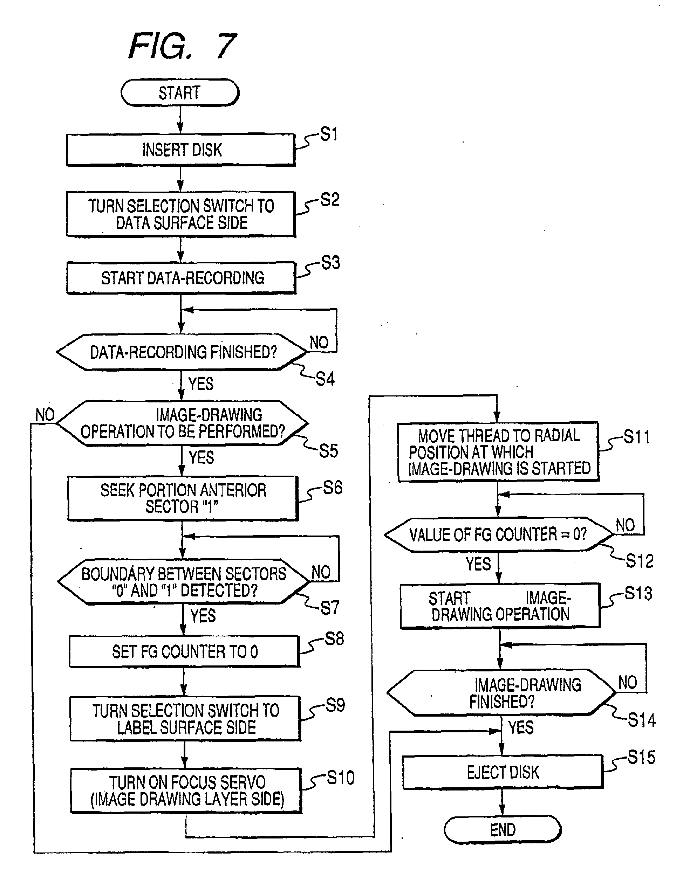

A control operation, which is performed by the optical disk apparatus 10 when the data-recording and the image drawing are performed on the optical disk 12, is described below. Optical disks having configurations illustrated in, for example, FIGS. 2, 3, and 4 are used as the optical disk 12. It is assumed that the data recording is performed on the data recording layer 36 of the optical disk 12, and that the image drawing is performed on the image drawing layer 44. FIG. 7 illustrates a flow of the control operation. In this control operation, according to a command issued by a user to continuously perform the data recording and the image drawing, the data recording is firstly performed. Upon completion of the data recording, the processing is automatically and continuously changed to the image drawing. The host device 100 previously stores the recording data for the data recording, and also stores the image data for the image drawing. The optical disk 12 is inserted into the optical disk apparatus 10 in step S1 by directing the data face 12a downwardly and by directing the label surface 12b upwardly.

When the user instructs from the host device 100 to continuously perform the data recording and the image drawing, first, the select switch 88 is connected to the contact point B in step S2. Consequently, the lower optical pickup 16 is put into an active state, while the upper optical pickup 18 is brought into an inactive state. Subsequently, the spindle motor 14 is rotationally driven, and the focus servo 82 is turned on. Laser beam 28 output from the optical pickup 16 is controlled by the reproducing power to be focused onto the data recording layer 36 of the optical disk 12, and the tracking servo 84 is turned on. The laser beam 28 undergoes a tracking control process to track the groove 34 of the data recording layer 36. The spindle servo 15 controls the spindle motor 14 so that the frequency of a wobble component corresponding to the groove 34, which is extracted from a tracking error signal, has a predetermined frequency. Consequently, data recording is performed (i.e., CLV recording is performed by performing a CLV control operation) by controlling the rotation of the optical disk 12 so that the linear velocity thereof is a predetermined linear velocity at a position onto which the laser beam 28 is irradiated. Alternatively, the data recording can be performed (i.e., the CAV recording is conducted by performing a CAV control) by controlling the spindle motor 14 at constant revolution by CAV control. The position information (represented by ATIP (Absolute Time in Pre-groove), ADIP (Address In Pre-groove), or land pre-pit) of the optical disk 12 is read by the optical pickup 16 in a state in which the CLV control operation or the CAV control is performed. Then, the optical pickup 16 is positioned at a predetermined data recording start radial position located at the inner circumference side of the disk by driving the stepping motor 24.

Thus, when preparations for the data-recording are completed, the host device 100 starts to transmit recording data. The recording data is once stored in the buffer memory 98 through the interface 102, and subsequently, the recording data are serially read from the buffer memory 98 at a constant data rate corresponding to the constant disk linear velocity in the case of performing the CLV control operation or at a variable data rate (i.e., a data rate which is synchronized with the wobble signal detected from the tracking error signal and which increases toward the outer circumference side) corresponding to the linear velocity at the recording position in the case of performing the CAV control operation. The read data is encoded by the encoder 96. Thus, the laser driver 86 is driven through the ALPC circuit 94. Consequently, the optical pickup 16 outputs laser beam 28 modulated according to the recording data to have power which takes binary values of the reproducing power and the recording power. Then, the data recording on the data recording layer 36 of the optical disk 12 is started in step S3.

Subsequently, the data recording process further proceeds. Thus, when the data recording is finished in step S4, the processing is automatically changed to the image drawing operation on the image drawing layer 44 in steps S5, S6, .... That is, first, the spindle motor 14 is rotationally driven by performing the CLV control operation or the CAV control operation in a state in which the select switch 88 is still connected to the contact point B (the focus servo 82 and the tracking servo 84 connected to the optical pickup 16 are in an on-state). Consequently, a position preliminarily predetermined as the rotation reference position is detected from the data recording layer 36 by the optical pickup 16.

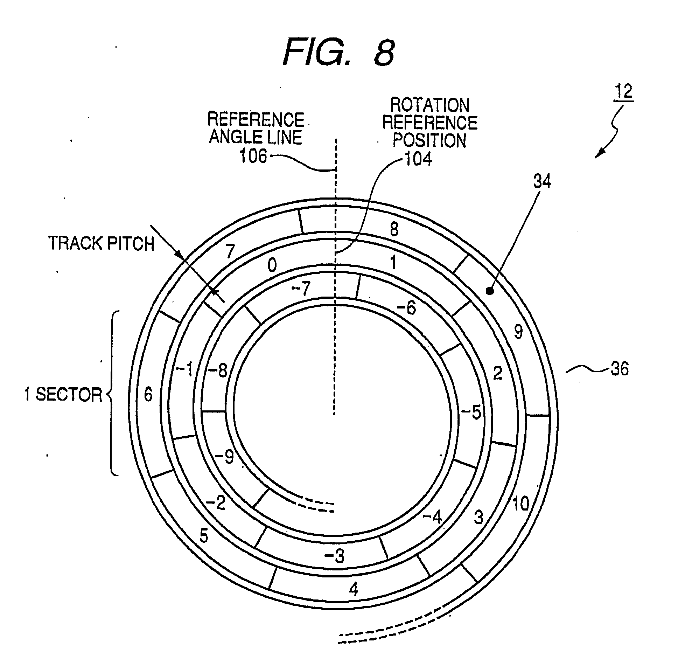

FIG. 8 illustrates an example of setting the rotation reference position. FIG. 8 schematically illustrates the position information (representing the sector number) according to ATIP information (in the case of the CD format) or ADIP information (in the case of the DVD+R(W) format) recorded by the groove 34 in the data recording layer 36. In this example, the sector number is represented by a simple integer, for convenience of description, and the boundary position between the sectors "0" and "1" is determined as the rotation reference position 104. Incidentally, in the case of what is called a hybrid CD-R disk configured so that a first session is set to be a recorded one, and that a user can record data in a second session or later, the rotation reference position can be set according to position information represented by a subcode included in the first session, instead of the position information represented by the ATIP information. Alternatively, in the case of employing the DVD-R(W) format, the rotation reference position can be set according to position information represented by the land pre-pit Alternatively, in the case of the recordable DVD corresponding to the hybrid CD-R, the rotation reference position can be set according to position information represented by an ECC block in a recorded data region.

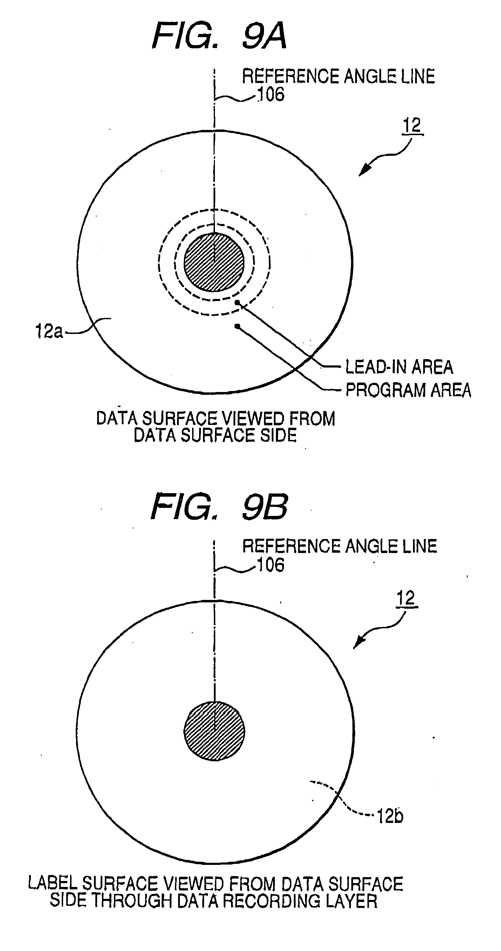

An imaginary half line extending in a radial direction of the disk and passing through the rotation reference position 104 is determined to be the reference angle line 106. As illustrated in FIGS. 9A and 9B, the reference angle line 106 is placed at the same position in each of the data surface 12a and the label surface 12b. The image drawing is performed by employing the reference angle line 106 as the reference position in the rotating direction. That is, the optical pickup 16 seeks the boundary position between the sectors "0" and "1" in step S6 shown in FIG. 7. If the boundary position, that is, the rotation reference position 104 is detected in step S7, the count value of the FG counter 19 (see FIG. 1) is reset (i.e., is set to be "0") in step S8. The FG counter 19 starts counting the FG pulses from the rotation reference position 104. The count value of the FG counter 19 is automatically returned to be "0" each time the count value reaches a value corresponding to one revolution of the optical disk. Consequently, the count value of the FG counter 19 corresponds to a rotation angle position from the reference angle line 106 in each revolution of the disk. That is, after the rotation reference position 104 is once detected, the rotation angle position from the reference angle line can be known by the count value of the FG counter 19 every revolution of the disk without detecting the rotation reference position 104. The counting operation of the FG counter 19 continues until the image drawing is finished.

In a state in which an operation of counting the FG pulses is repeated by the FG counter 19 in this manner, the select switch 88 is turned to the side of the contact point A in step S9, Consequently, the lower optical pickup 16 is brought into an inactive state, while the upper optical pickup 18 is put into an active state. The spindle motor 14 undergoes the CAV control so that the spindle motor 14 is rotated at a predetermined angular velocity, which is determined as an angular velocity for the drawing of a visible image.
Subsequently, the focus servo 82 is turned on in step S10. Laser beam 30 output from the optical pickup 18 is controlled by the reproducing power to be focused onto the image drawing layer 44 of the optical disk 12. Because there is no track (or groove) in the image drawing layer 44, the tracking servo 84 is turned off. The optical pickup 18 is once returned to the inner circumference side origin position by driving the stepping motor 26. Subsequently, the optical pickup 18 is moved in the direction of the outer circumference side by inverting the stepping motor 26. At that time, the drive pulses of the stepping motor 26 are counted by the drive pulse counter 87 to thereby measure the position in the disk radial direction of the optical pickup 18 from the inner circumference side origin position. Then, when the measured radial position of the optical pickup 18 reaches a position predetermined as a radial position at which the image drawing operation is started, the movement in the disk radial direction of the optical pickup 18 is once stopped in step S11, The reason for describing the expression "the image drawing operation is started" instead of the expression "the image drawing is started" is that even when the "image drawing operation" is started, the "image drawing" (i.e., the change in the visible light characteristics of the image drawing layer 44) is not immediately started at the predetermined position, depending upon the image data. That is, in a case where the density of a pixel to be drawn at a position, at which the image drawing operation is started, is 0 (corresponding to white), even when the image drawing operation is started, the "image drawing" causing change in the visible light characteristics of the image drawing layer 44 is not performed at this position. The "image drawing" causing change in the visible light characteristics is not performed until the density of an image to be drawn at the position, at which the image drawing operation is started, is higher than 0.

Thus, when preparations for the data-recording are completed, the host device 100 starts to transmit image data. The image data is once stored in the buffer memory 98 through the interface 102. Subsequently, the recording data are serially read from the buffer memory 98 at a constant rate synchronized with the number of revolutions of the disk per unit time, the read data is encoded by the encoder 96, and the encoded image data are output from the leading encoded image data in synchronization with the timing "0" set to the count value of the FG counter 19 (in the case of the example illustrated in FIG. 5, the encoded image data respectively corresponding to the pixels P11, P12, ..., P1n, P21, P22, ..., P2n, ..., Pmn are output in this order), in step S12, thereby the laser driver 86 is driven through the ALPC circuit 94. Consequently, laser beam 30 modulated according to the image data to take binary values of the reproducing power (i.e., the non- image-drawing power) and the recording power (i.e., the image drawing power) is output from the optical pickup 18, thereby the image drawing operation to be performed on the image drawing layer 44 of the optical disk 12, in which the number of pixels per round of the circumference of each of the coaxial circles is constant, regardless of the disk radial position, is started in step S13. When the image drawing operation is started, the stepping motor 26 is driven in synchronization with the rotation of the disk, that is, the stepping motor 26 is driven by one step every round or every plural rounds. Thus, the optical pickup 18 is serially moved at predetermined micro-pitches in the direction toward the outer circumference of the disk to thereby performing the image drawing.

Subsequently, the image drawing proceeds. When the count value of the drive pulse counter 87 reaches a value corresponding to a position designated as an image drawing operation termination radial position, the image drawing operation is finished in step S14. When the image drawing is finished, the operations of the optical pickups 16 and 18 are stopped. Thus, the rotation of the spindle motor 14 is stopped. Consequently, the optical disk 12 is ejected from the optical disk apparatus 10 in step S 15. The ejected optical disk 12 is such that the recording data is recoded on the data recording layer 36, and that a visible image is formed on the image drawing layer 44. This visible image can be visually viewed from the side of the label surface 12b.

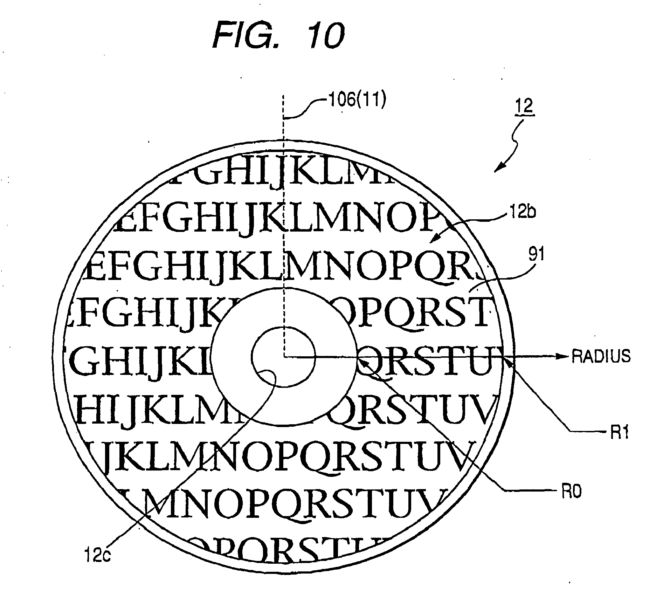

FIG. 10 illustrates an example of visual appearance of a visible image 91, viewed from the side of the label surface 12b , which is drawn on the image drawing layer 44 of the optical disk 12 by performing the image drawing control operation illustrated in FIG. 7. This visible image 91 is formed such that a radius R0 is the image-drawing-operation start radial position, and that a radius R1 is the image drawing operation termination radial position. Reference character 12c designates a center hole. In the example shown in FIG. 10, image data (i.e., a set of pixel data shown in FIG. 5) is created by setting the orientation of a visible image, which is to be drawn, to that of the image reference angle line 11 shown in FIG. 5. Additionally, the image drawing operation is started from the timing corresponding to the reference angle line 106, which is measured by the FG counter 19 (the first pixel P11 shown in FIG. 5 is drawn on the reference angle line 106 on the optical disk 12). Thus, the visible image 91 is drawn by setting the orientation thereof to that of the reference angle line 106 on the optical disk 12.

According to the first embodiment, there is no need for inverting the front and rear sides of the optical disk for performing both the data recording and the visible image drawing. Thus, a cumbersome inverting operation is unnecessary. Also, this results in reduction in the time from the termination of the data recording to the start of the image drawing operation. Additionally, since the reference angle line 106 is determined according to the detection of the rotation reference position 104 by the optical pickup 16, the image drawing can be performed by the optical pickup 18 on the basis of the determined reference angle line 106. Thus, a visible image can be formed by setting the orientation thereof substantially to that of the reference angle line 106. That is, the visible image can be formed on the image drawing layer by setting the orientation of the visible image on the basis of the detected reference angle line 106. Further, according to the invention, since the rotation reference position 104 is set only on the data surface 12a, there is no necessity for providing a mark representing the rotation reference position on the label surface 12b. Therefore, a larger image drawing area can be assured for that. In the foregoing description of the first embodiment, it has been described that the boundary position between the sectors "0" and "1" is set as the reference position 104. However, an arbitrary position on the groove C formed in the data recording layer A can be set as the reference position.

First Modification of First Embodiment
In the first embodiment, the FG counter 19 is once reset at the predetermined rotation reference position 104 (the boundary position between the sectors "0" and "1") on the data recording layer 36 of the optical disk 12, and counts the FG pulses subsequently generated. Therefore, every time the count value reaches a value corresponding to one revolution, the count value is returned to be "0". Thus, the rotation angle position from the reference angle line 106 is measured every revolution. However, according to this method, in a case where the resolution of the FG pulses is low (i.e., the number of the FG pulses per revolution is small), the deviation angle (or offset angle) from the reference angle line 106 on the data recording layer 36 to the position, at which the FG pulse is generated, may be large. In the first embodiment, during image drawing is performed, a visible image is drawn by regarding the position, at which the FG pulse is generated, as the position of the reference angle line 106. Thus, this offset angle appears as the deviation of the orientation of the drawn visible image from the direction of the reference angle line 106. Thus, in a case where the offset angle is large, for example, when the optical disk 12 is ejected from the optical disk apparatus 10 after a visible image is drawn on the optical disk 12, and the optical disk 12 is inserted into the optical disk apparatus 10 again in order to perform additional image drawing (e.g., splice-writing or overwriting), there is a fear that a conspicuous deviation may be caused between the orientation of the previously formed visible image and that of the additional visible image.

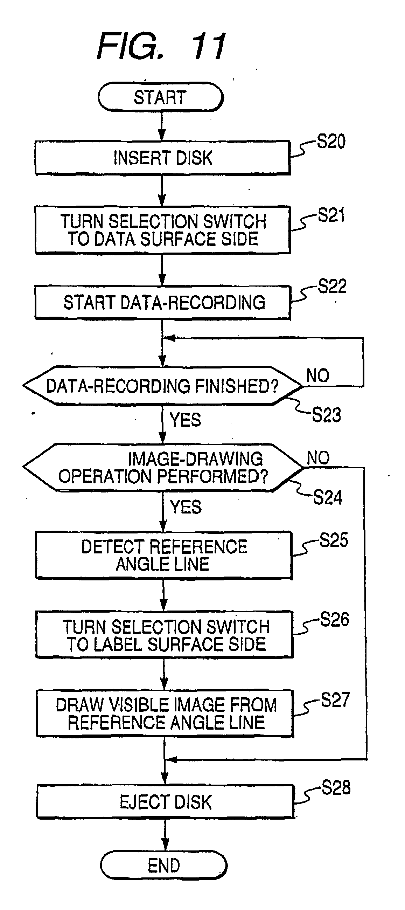

A technique of reducing the deviation of the orientation of the drawn visible image to that of the reference angle line 106 will be described below. This technique enhances the detecting resolution of the reference angle line 106 by using both the counting of FG pulses and the counting by a counter implemented by software of the system control portion 90. FIG. 11 illustrates the entire control flow of a process according to this technique. The optical disk 12 is inserted into the optical disk apparatus 10 by directing the data recording layer 36 downwardly and by directing the image drawing layer 44 upwardly in step S20. When a user instructs from the host device 100 to continuously perform the data recording and the image drawing, first, the select switch 88 is connected to the contact point B in step S21. Consequently, the lower optical pickup 16 is put into an active state, while the upper optical pickup 18 is brought into an inactive state. Then, the data recording of data on the data recording layer 36 of the optical disk 12 is started in step S22.

Subsequently, the data recording process further proceeds, and when the data recording is finished in step S23, the processing is automatically changed to the image drawing operation on the image drawing layer 44 in steps S24, S25, .... That is, first, the CAV control operation is performed on the spindle motor 14 so as to be rotated at a predetermined angular velocity, which is set to be a velocity for the image drawing. The CAV control operation is performed until the image drawing is finished. Subsequently, in a state in which the select switch 88 is still connected to the contact point B (the focus servo 82 and the tracking servo 84 connected to the optical pickup 16 are in an on-state), a position 104 (see FIG. 8) preliminarily predetermined as the rotation reference position is detected from the data recording layer 36 by the optical pickup 16 in step S25. Then, an imaginary half line extending in a radial direction of the disk and passing through the rotation reference position 104 is determined to be the reference angle line 106 (see FIG. 8). A rotation angle with respect to the reference angle line 106 is measured every round by using both the counting of FG pulses and the counting by the counter implemented by software.

Thus, in a state in which the rotation angle with respect to the reference angle line 106 is repeatedly measured every round in this manner, the select switch 88 is turned to the side of the contact point A in step S26. Consequently, the lower optical pickup 16 is brought into an inactive state, while the upper optical pickup 18 is put into an active state. Thus, the image drawing operation is started from the predetermined image drawing start position in step S27. Subsequently, the image drawing proceeds, and when the count value of the drive pulse counter 87 reaches a value corresponding to the position designated as the image drawing operation termination radial position, the image drawing operation is finished. Upon completion of the image drawing, the optical disk 12 is ejected from the optical disk apparatus 10 in step S28. The entire control operation is finished.

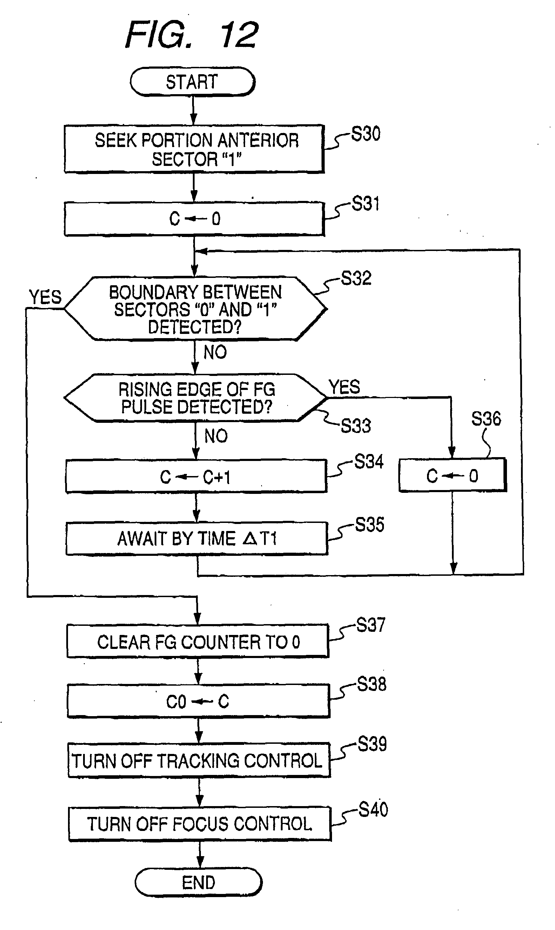

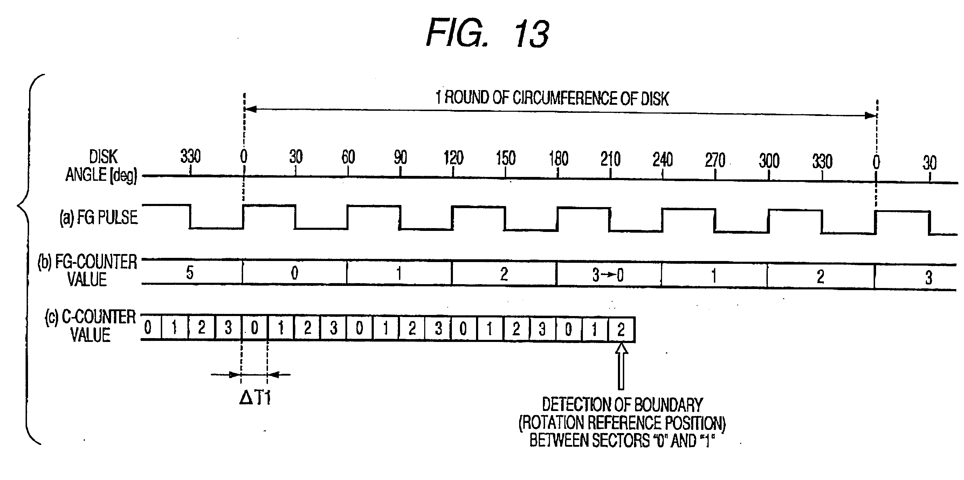

The details of the control operation of "detecting the reference angle line" in step S25 shown in FIG. 11 are illustrated in FIG. 12. FIG. 13 illustrates the operation controlled as illustrated in FIG. 12. In this example, it is assumed that 6 FG pulses are generated every revolution, as illustrated in FIG. 13. As shown in FIG. 13, the count value of the FG counter 19 is incremented at the rising edge of each FG pulse. As illustrated in FIG. 13, the count value of the counter (hereunder referred to as a "C-counter") implemented by software is incremented at each reference clock based on a crystal oscillation clock. The cycle ΔT1 of this reference clock is shorter than the cycle of the FG pulse. A plurality of reference clock pulses (about four pulses in the example shown in FIG. 13) are generated in the cycle of the FG pulse. The shorter the cycle ΔT1 of the reference clock, the detecting resolution of the reference angle line 106 can be enhanced.

The control flow illustrated in FIG. 12 is described below. In this control flow, "C" designates the count value of the C-counter, In the process of detecting the reference angle line 106, first, the optical pickup 16 starts seeking the boundary position between the sectors "0" and "1", that is, the rotation reference position 104 in step S30. Further, the C-counter is initially reset in step S31. The count value of the C-counter is incremented every cycle time ΔT1 according to the reference clock in steps S34 and S35. The count value of the C-counter is reset to be "0" in step S36 (see (c) of FIG. 13) every time the rising edge of the FG pulse is detected in step S33. At the time the rotation reference position 104 is detected in step S32, the count value of the FG counter 19 is reset to "0" in step S37, and the count value C (in the example shown in (c) of FIG. 13, C = 2) of the C-counter is stored in a memory provided in the system control portion 90 as an offset value C0 at the rotation reference position 104 from the rising edge of the preceding FG pulse in step S38. Subsequently, in a state in which the CAV control operation is performed on the rotation of the disk so that the number of revolutions per unit time of the disk is a predetermined number, the counting of the FG pulses by the FG counter 19 and that of the reference clock pulses by the C-counter are continued, Consequently, a timing, at which the count value of the FG counter 19 is "0" and at which the count value of the C-counter is C0, is detected as a timing of detecting the reference angle line 106 every round. Thus, the optical pickup 16 finishes the function thereof, and the tracking control is turned off in step S39, and the focus control is turned off in step S40.

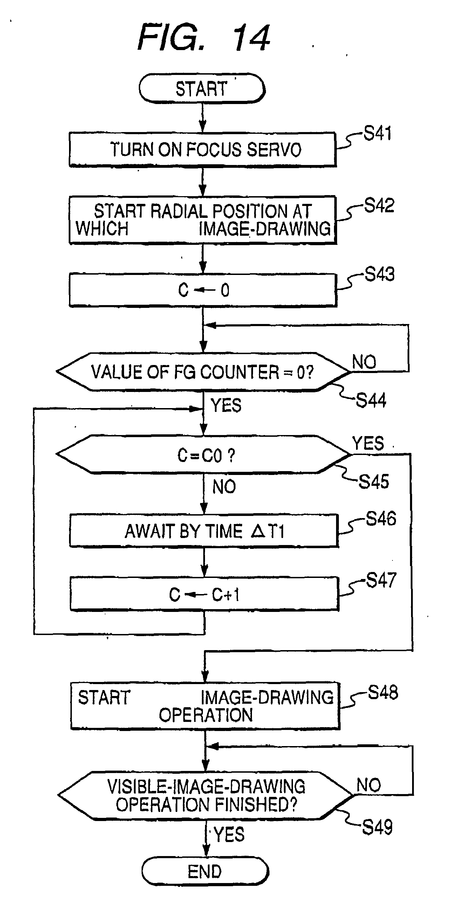

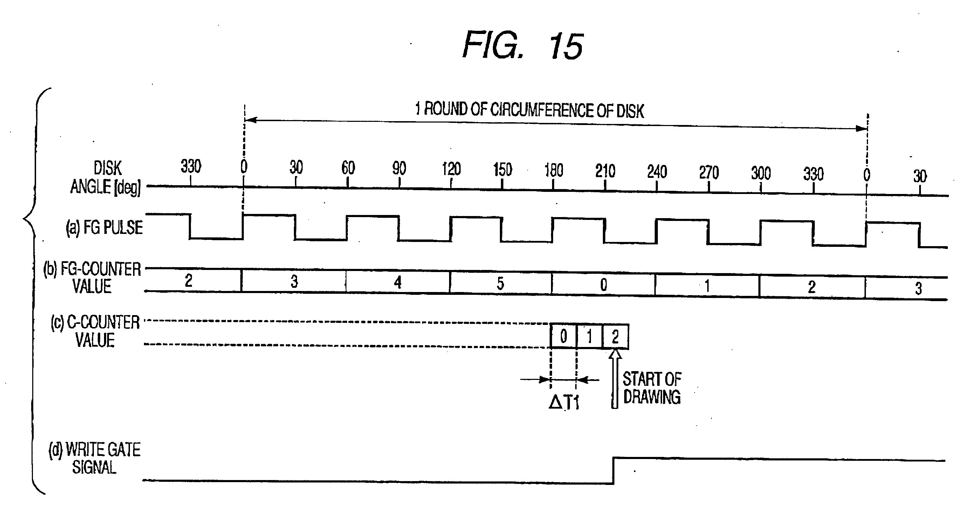

FIG. 14 illustrates the details of the control operation of "drawing a visible image from the reference angle line" in step S27 shown in FIG. 11. FIG. 15 illustrates the operation controlled as illustrated in FIG. 14. When the image drawing operation is started, first, the focus servo 82 for the optical pickup 18 is turned on in step S41 and, laser beam 30 is focused on the image drawing layer 44. Subsequently, the stepping motor 24 is driven to position the optical pickup 18 at a predetermined image drawing operation start radial position in step S42. Further, the C-counter is initially reset in step S43. The count value of the C-counter is incremented every cycle time ΔT1 according to the reference clock pulses, and the count value of the C-counter is reset to "0" every time the rising edge of the FG pulse is detected. After the count value of the FG counter 19 is rest to "0" in step S37 in the process of detecting the reference angle line 106 shown in FIG. 12, the count value of the FG counter 19 is automatically rest to "0" every time the count value thereof reaches the value corresponding to one revolution, and the counting of the FG pulses is repeated.

The count value of the FG counter 19 is reset to "0" in step S44, and the count value of the C-counter is incremented every cycle time ΔT1 according to the reference clock pulses in steps S46 and S47, and a WRITE GATE signal is output at the time when the count value of the C-counter reaches the offset value C0 stored in the memory in step S45, as illustrated in FIG. 15, and the image drawing operation is started in step S48. As described above, the timing at which the count value of the FG counter 19 is "0", and at which the count value of the C-counter is C0, is the timing of detecting the reference angle line 106, every round. Consequently, the image drawing operation is started exactly from the position of the reference angle line 106. Thus, even in a case where the optical disk 12 is ejected from the optical disk apparatus 10 after the visible image is drawn on the optical disk 12, and the optical disk 12 is inserted Into the optical disk apparatus 10 again to perform additional image drawing (e.g., splice-writing or overwriting), the additional image drawing can be achieved without causing a conspicuous deviation between the orientation of the previously formed visible image and that of the additional visible image. Subsequently, if the image drawing is finished in step S49, the process of "drawing a visible image from the reference angle line" In step S27 shown in FIG. 11 is finished.

Second Modification of First Embodiment
Although the first modification of the first embodiment enhances the detecting resolution of the reference angle line by utilizing both the counting of the FG pulses and that of the reference clock pulses, the counting of multiplied pulses corresponding to the FG pulses can be used instead of the counting of the reference clock pulses. In this case, as indicated with dashed lines in FIG. 1, a multiplier 108 frequency multiplies the FG pulse output from the spindle motor 14 so that the frequency of the FG pulse is increased to a predetermined multiple of the frequency thereof. The FG pulses whose frequency is multiplied (i.e., multiplied FG pulses) are counted by the multiplied-FG-pulse counter 110. This multiplied-FG-pulse counter 110 is used similarly to the C-counter of the first modification (see FIGS. 11 to 15). That is, in the process of "detecting the reference angle line" in step S25 shown in FIG. 11, the count value of the multiplied-FG-pulse counter 110 is count up according to the multiplied FG pulses and is reset to "0" every time the rising edge of the FG pulse is detected (see the operation of the C-counter shown in FIG. 13). When the rotation reference position 104 (see FIG. 8) is detected, the count value of the FG counter is reset to "0". The count value (in the example shown in FIG. 13, C=2) of the multiplied-FG-pulse counter is stored in the memory provided in the system control portion 90 as the offset value of the rotation reference position 104 from the rising edge of the preceding FG pulse.

In the process of "drawing a visible image from the reference angle line" in step S27 shown in FIG. 11, the count value of the multiplied-FG-pulse counter 110 is continuously count up according to the multiplied FG pulses. The count value of the multiplied-FG-pulse counter 110 is reset to "0" every time the rising edge of the FG pulse is detected. After the count value of the FG counter 19 is reset to "0" in the process of detecting the reference angle line 106, the count value of the FG counter 19 is automatically reset to "0" every time the count value thereof reaches the value corresponding to one revolution, and the counting of the FG pulses is repeated. Timing when the count value of the FG counter 19 is rest to "0", and when the count value of the multiplied-FG-pulse counter 110 count up according to the multiplied FG pulses reaches the offset value stored in the memory (the timing corresponding to C=2 in the example shown in FIG. 15) is the timing of detecting the reference angle line every round. With this timing, a WRITE GATE signal is output (see FIG.15), and the image drawing operation is started. Consequently, the image drawing operation is started exactly from the position of the reference angle line 106.

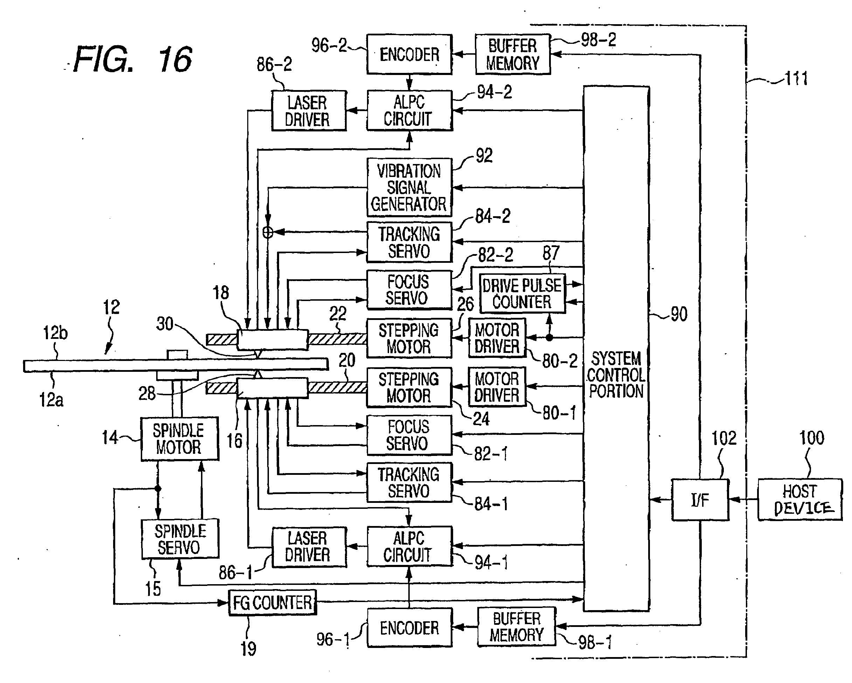

Second Embodiment
A second embodiment of the invention will be described below. The second embodiment is configured so that a control system and a signal processing system for the optical pickups 16 and 18 used by being switched by the select switch 88 (see FIG. 1) are provided corresponding to each of the optical pickups 16 and 18 so that the optical pickups 16 and 18 can be simultaneously used. FIG. 16 illustrates the system configuration of the optical disk apparatus according to the second embodiment. Components common to the first embodiment (see FIG. 1) are designated by the same reference numerals used in FIG. 1. The configuration shown in FIG. 16 is configured by eliminating the select switch 88 shown in FIG. 1 and by providing a set of the motor driver 80, the focus servo 82, the tracking servo 84, the laser driver 86, the ALPC circuit 94, the encoder 96, and the buffer memory 98 for each of the optical pickups 16 and 18.

According to the kind of the optical disk 12, the optical disk apparatus 111 can operate in the following modes.
(a) In a case where the optical disk 12 is a single-sided disk, data recording or data reproduction is performed by the optical pickup 16 or 18 (in a case where the optical disk 12 is a playback-only disk, only data reproduction is performed).
(b) In a case where the optical disk 12 is a double-sided disk, data recording or data reproduction is performed by the optical pickup 16 or 18 (in a case where the optical disk 12 is a playback-only disk, only data reproduction is performed). (The optical pickups 16 and 18 operate simultaneously or nonsimultaneously).
(c) In a case where the optical disk 12 is a single-sided disk with an image drawing layer, data recording or data reproduction is performed by the optical pickup 16, while a visible image is drawn by the optical pickup 18 (the optical pickups 16 and 18 operate simultaneously or nonsimultaneously).

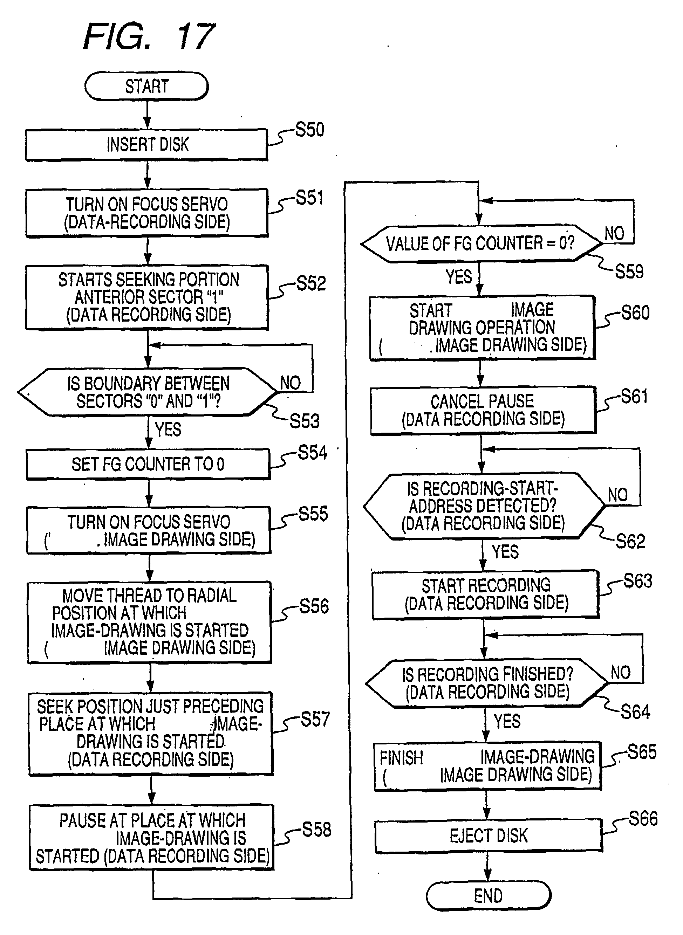

FIG. 17 illustrates the flow of a control operation in a case where the optical disk apparatus 111 shown in FIG. 16 is used, data recording is performed on the optical disk 12 by the lower optical pickup 16, and the image drawing operation is simultaneously performed by the upper optical pickup 18. This control operation is performed according to an instruction issued by the user to simultaneously perform the data recording and the image drawing. The host device 100 previously stores recording data for the data recording, and image data for drawing a visible image. The optical disk 12 is inserted into the optical disk apparatus 111 in step S50 by directing the data surface 12a downwardly and by directing the label surface 12b upwardly.

When the user issues the instruction from the host device 100 to simultaneously perform the data recording and the image drawing, both the optical pickups 16 and 18 are put into an active state. Subsequently, the spindle motor 14 undergoes the CAV control operation so that the angular velocity thereof is set to be the predetermined angular velocity which is determined to be the velocity for the image drawing. This CAV control operation is continued until the data recording and the image drawing are finished. Subsequently, a focus servo 82-1 for the data recording side is turned on in step S51, and laser beam 28 output from the optical pickup 16 is controlled by the reproducing power to be focused on the data recording layer 36 of the optical disk 12. Further, a tracking servo 84-1 is turned on, and the laser beam 28 undergoes a tracking control process to track the groove 34 of the data recording layer 36. In this state, the position information (represented by ATIP information, ADIP information, a land pre-pit (in the case of a hybrid CD-R, the position information represented by a subcode included in a first session can be utilized)) of the optical disk 12 is read by the optical pickup 16, and the optical pickup 16 starts seeking a position (e.g., the boundary position between the sectors "0" and "1" shown in FIG. 8) predetermined as the rotation reference position on the data recording layer 36 by driving the stepping motor 24 in step S52. At the time the rotation reference position 104 is detected in step S53, the count value of the FG counter 19 is reset to "0" in step S54, and the counting of the FG pulses is started by the FG counter 19 from the rotation reference position 104. The count value of the FG counter 19 is automatically reset to "0" every time the count value thereof reaches a value corresponding to one revolution. Consequently, the count value of the FG counter 19 corresponds to the rotation angle position from the reference angle line 106 (see FIG. 9) every round. The counting operation of the FG counter 19 is continued until the image drawing is finished.

Subsequently, a focus servo 82-2 for the Image drawing side is turned on in step S55. Laser beam 30 having the reproducing power output from the optical pickup 18 is controlled to be focused onto the image drawing layer 44 of the optical disk 12. Because no track (or groove) is provided in the image drawing layer 44, the tracking servo 84-2 turned is turned off. After the optical pickup 18 is once returned to an inner circumference side origin position (e.g., a position at which the movement of the optical pickup 18 in the radial direction of the disk is mechanically stopped by a stopper) by driving the stepping motor 26, the optical pickup 18 is moved toward the outer circumference side by reversing the stepping motor 26. At that time, the drive pulses for the stepping motor 26 from an inner circumference side origin position are counted by a drive pulse counter 87 to thereby measure the disk radial direction position of the optical pickup 18. Then, the movement in the disk radial direction of the optical pickup 18 is once stopped in step S56 when the measured radial direction position of the optical pickup 18 reaches the predetermined position at which the visible image operation is started. Further, the optical pickup 16 seeks a position just anterior to the position, at which the data recording is started, in step S67 by driving the stepping motor 24 while reading the position information (represented by ATIP information, ADIP information, a land pre-pit (in the case of a hybrid CD-R, the position information represented by a subcode included in a first session can be utilized)) of the optical disk 12. The optical pickup 16 is put into a data recording pause state (i.e., an operating state in which the kickback of the optical pickup by one track is performed once every round) at the just anterior position in step S58.

Thus, when preparations for performing the data-recording and the image drawing simultaneously are completed, the host device 100 starts to transmit recording data and image data. The image data is once stored in a buffer memory 98-2 through the interface 102. Subsequently, the recording data are serially read from the buffer memory 98-2 at a constant rate synchronized with the number of revolutions of the disk per unit time, the read data is encoded by an encoder 96-2, and the encoded image data are output from the leading encoded image data in synchronization with the timing of "0" set to the count value of the FG counter 19 (in the case of the example illustrated in FIG. 5, the encoded image data respectively corresponding to the pixels P11, P12, ..., P1n, P21, P22, ..., P2n, ..., Pmn are output in this order), in step S59, thereby the laser driver 86-2 is driven through an ALPC circuit 94-2. Consequently, laser beam 30 modulated according to the image data to have binary values of the reproducing power (i.e., the non- image-drawing power) and the recording power (i.e., the image drawing power) is output from the optical pickup 18, thereby the image drawing operation to be performed on the image drawing layer 44 of the optical disk 12 (so that the number of pixels per round of the circumference of each of the coaxial circles is constant, regardless of the disk radial position) is started in step S60. When the image drawing operation is started, the stepping motor 26 is driven in synchronization with the rotation of the disk (the stepping motor 26 is driven by one step every round or every plural rounds), and the optical pickup 18 is serially moved at predetermined micro-pitches in the direction of the outer circumference of the disk to thereby perform the image drawing.

The data recording is also started substantially simultaneously with the start of the image drawing operation. That is, the recording data sent out of the host device 100 is once stored in the buffer memory 98-1 through the interface 102. Then, the data recording pause state is canceled in step S61, the recording data are serially read from the buffer memory 98-1 with timing of detecting a data recording start address, in step S62 at a variable data rate (i.e., a data rate which is synchronized with the wobble signal detected from the tracking error signal and which increases toward the outer circumference side) corresponding to the linear velocity at the recording position in the case of performing the CAV control operation, and the read data is encoded by the encoder 96-1, thereby the laser driver 86-1 is driven through the ALPC circuit 94-1. Consequently, the optical pickup 16 outputs laser beam 28 modulated according to the recording data to have binary values of the reproducing power and the recording power, and the data recording on the data recording layer 36 of the optical disk 12 is started in step S63 (i.e., the data recording is performed so that the data density in the direction of the circumference of the disk is constant independent of the radial position of the disk).

Subsequently, the data recording proceeds, and when the data recording is finished in step S64, the operation of the optical pickup 18 is stopped. Alternatively, the image drawing proceeds, and when the count value of the drive pulse counter 87 reaches a value corresponding to a position designated as an image drawing operation termination radial position, the image drawing operation is finished in step S65. When the image drawing is finished, the operation of the optical pickup 16 is stopped in step S65. Then, the rotation of the spindle motor 14 is stopped, and the optical disk 12 is ejected from the optical disk apparatus 10 in step S66. The ejected optical disk 12 is formed such that the recording data is recoded on the data recording layer 36, and a visible image is formed on the image drawing layer 44. This visible image can be visually viewed from the side of the label surface 12b.

According to the second embodiment, there is no need for inverting the front and rear sides of the optical disk for performing both the data recording and the image drawing. Thus, a cumbersome inverting operation is unnecessary. Also, because the data recording and the image drawing are simultaneously performed, the whole time needed for the data recording and the image drawing can be reduced, as compared with the case of performing the data recording and the image drawing at different times. Additionally, the reference angle line 106 is determined according to the detection of the rotation reference position 104 by the optical pickup 16. The image drawing is performed on the basis of the determined reference angle line 106 by the optical pickup 18. Thus, the visible image can be formed by setting the orientation thereof substantially to that of the reference angle line 106. Thus, a visible image can be formed by setting the orientation thereof substantially to that of the reference angle line 106. Also, according to the invention, it is enough to set the rotation reference position 104 only on the data surface 12a and, there is no necessity for providing a mark representing the rotation reference position on the label surface 12b. Thus, a larger image drawing area can be assured for that.

Additionally, by employing the method for correcting the offset angle as described above in the first and second modification of the of the first embodiment, the second embodiment can reduce the deviation of the orientation of the drawn image from that of the reference angle line 106 and can make a deviation caused between the orientation of the previously formed visible image and that of the additional visible image small or inconspicuous in a case where additional image drawing (e.g., splice-writing or overwriting) is performed.

<Judging method 1 for disk capable of drawing image>
When the image is to be drawn on the surface of the optical disk, whether or not the optical disk on which the image is to be drawn is a disk capable of drawing the image needs to be previously judged. Examples of judging methods will be described below. In this method, when identifying information showing that the optical disk is the disk on which the image can be drawn (disk identifying information of allowing the image drawing) is newly defined to record data on the data recording layer 36 of the optical disk 12 and the optical disk is inserted into the optical disk device 10 (Fig. 1), 111 (Fig. 16), it is judged whether or not the inserted optical disk is a disk on which the image can be drawn depending on whether or not the disk identifying information of allowing the image drawing can be read by the optical pick-up 16 at the data surface 12a side.

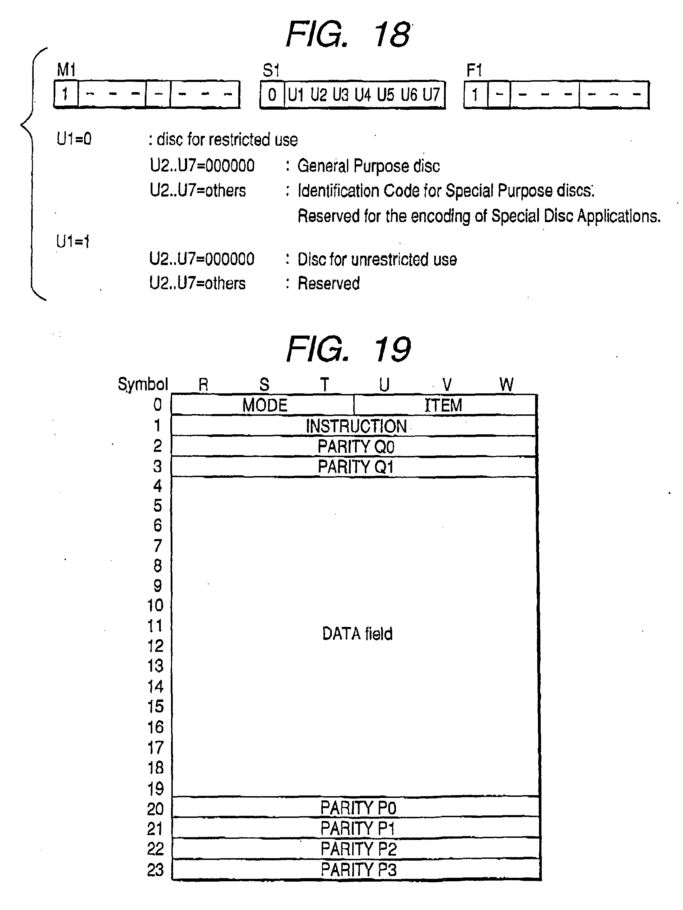

(Definition example 1 of disk identifying information of allowing the image drawing in CD format)
When the data recording layer 36 is formed by a CD format, the disk identifying information of allowing the image drawing can be recorded by using the undefined code of an ATIP. Fig. 18 shows the structure of the data of the ATIP. In this data structure, it is assumed that "U1" is "1" and the disk identifying information of allowing the image drawing can be put in "U2 to U7". For instance, "U1 to U7" = "1010101" can be defined as the disk identifying information of allowing the image drawing.

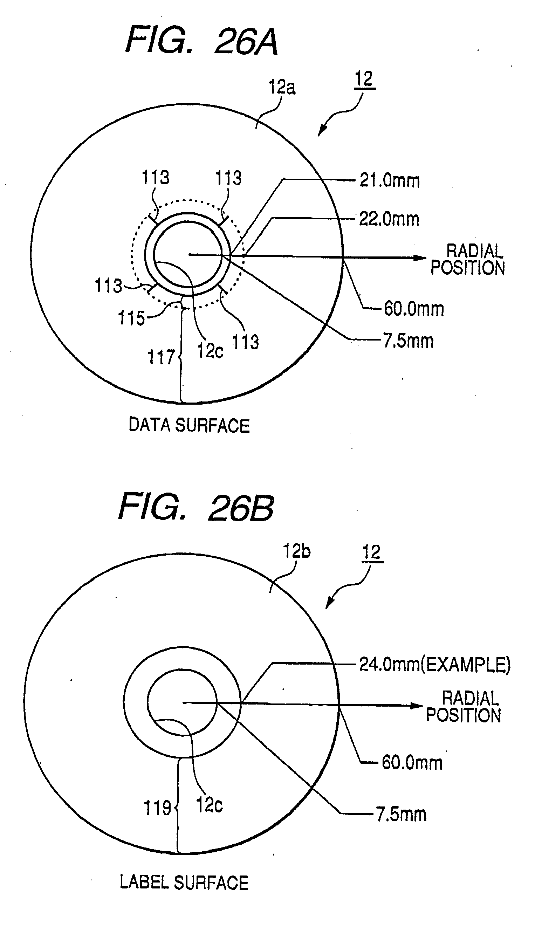

(Definition example 2 of disk identifying information of allowing image drawing in CD format)
For instance, in the case of what is called a hybrid CD-R disk in which a first session is already recorded and parts after a second session can be recorded by a user, the undefined codes of sub-codes R to W of the first session are used to record the disk identifying information of allowing the image drawing. Fig. 19 shows the data structure of the sub-codes. In this data structure, when "MODE" = "111" and "ITEM" = "000", the sub-codes R to W show a user mode so that the user can freely define "INSTRUCTION" and "DATA field". Thus, for instance, a case that "INSTRUCTION" = "010101", and "DATA field" shows a pattern illustrated in Fig. 26 can be defined as the disk identifying information of allowing the image drawing.

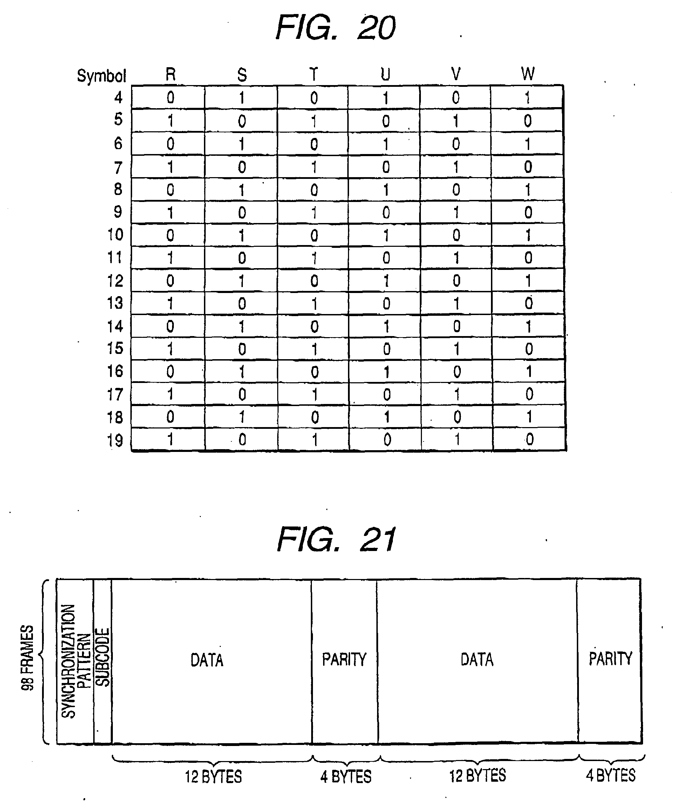

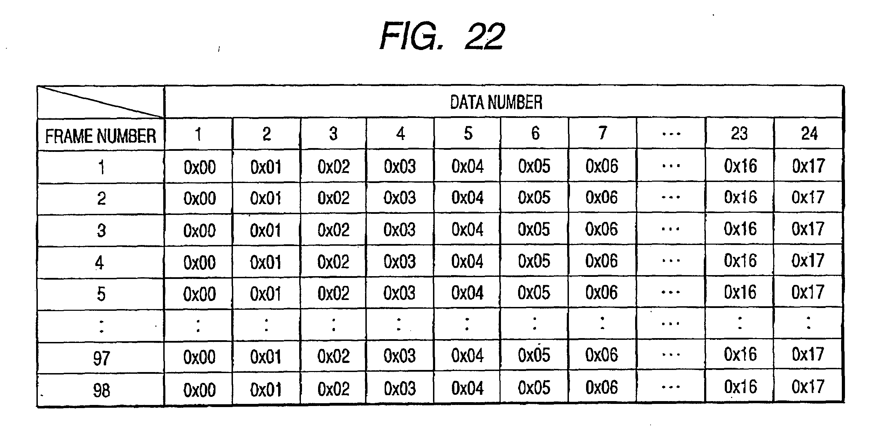

(Definition example 3 of disk identifying information of allowing image drawing in CD format)
Similarly, in the case of what is called a hybrid CD-R disk in which the first session is already recorded and the parts after the second session can be recorded by the user, the disk identifying information of allowing the image drawing can be recorded in the main data of a read-in area or a read-out area of the first session. Fig. 21 shows a data structure of one sector of the CD format. In this data structure, data having a meaning is recorded in "data" in a program area. However, since the "data" in the read-in area or the read-out area is not read by a drive, data having no meaning such as random data or zero data is ordinarily recorded. Thus, the disk identifying information of allowing the image drawing can be recorded in the "data" of the read-in area or the read-out area. One example of the disk identifying information of allowing the image drawing that is recorded in the "data" of the read-in area or the read-out area is shown in Fig. 22. In this example, a data value is increased one by one.

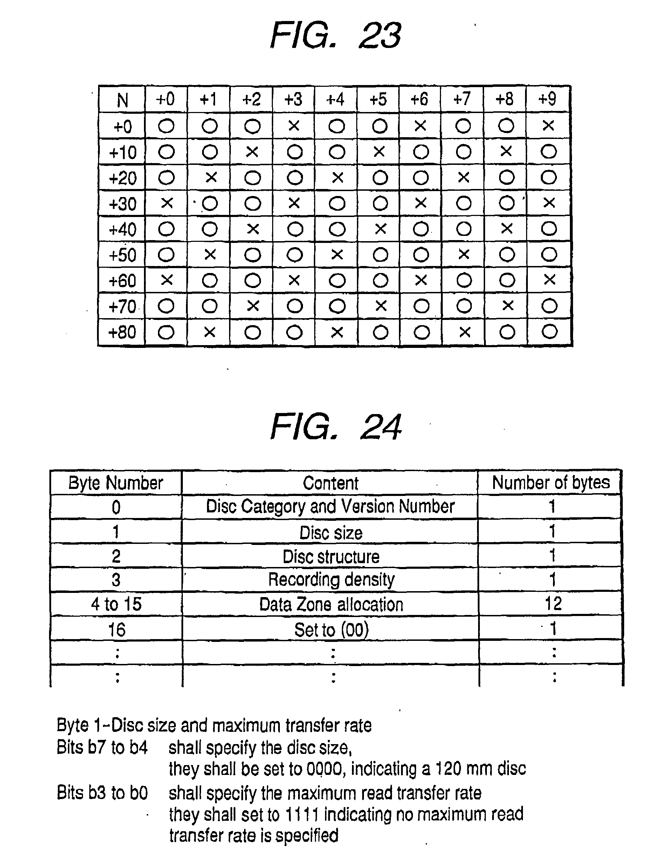

(Definition example 4 of disk identifying information of allowing image drawing in CD format)
Similarly, in the case of what is called a hybrid CD-R disk in which the first session is already recorded and the parts after the second session can be recorded by the user, a specific CRC error generating pattern of the first session can be defined as the disk identifying information of allowing the image drawing. An example of the CRC error generating pattern is shown in Fig. 23. Numbers 0 to 89 designates addresses N to (N+89) of sub-code frames from an arbitrary sub-code frame N. "O" shows the sub-code frame having no CRC error. "X" shows the sub-code frame having the CRC error. In the example shown in Fig. 23, the pattern that the CRC error is generated at intervals of addresses of the multiples of 3 subsequent to the address N is defined as the disk Identifying information of allowing the image drawing. Then, the sub-codes are recorded so that such a CRC error generating pattern is obtained.

(Definition example of disk identifying information of allowing image drawing in DVD + R format)
When the data recording layer 36 is formed by a DVD+R or a DVD+RW format, the disk Identifying information of allowing the image drawing can be recorded by using the undefined code of an ADIP. Fig. 24 shows the structure of the data of the ATIP. In this data structure, when the values of "b7 to b4" of "Byte I" are set to values except "0000", the disk identifying information of allowing the image drawing can be recorded. For instance, "b7 to b4" = "1010" can be defined as the disk identifying information of allowing the image drawing. In the case of a DVD-R or a DVD-RW format using a land pre-pit, the disk identifying information of allowing the image drawing can be recorded by using the undefined code of the land pre-pit.

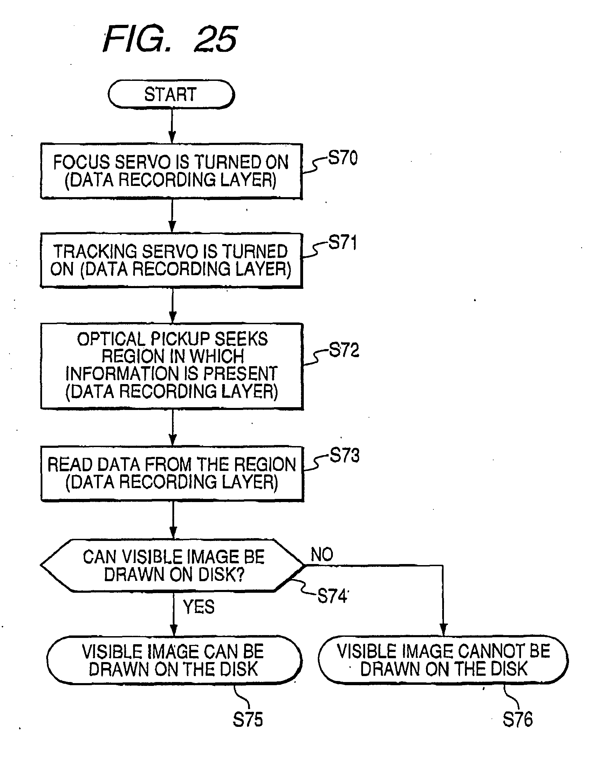

FIG. 25 illustrates a flow of a method performed by the optical disk apparatuses 10 and 111 to judge, whether a visible image can be drawn on an optical disk in a case where disk identifying information of allowing the image drawing is recorded on the data recording layer 36. When the optical disk 12 is inserted into the optical disk apparatus, the spindle motor 14 is driven, and the focus servo 82 (or 82-1) corresponding to the lower optical pickup 16 is turned on in step S70,and laser beam 28 is focused on the data recording layer 36. Subsequently, the tracking servo 84 (or 84-1) corresponding to the optical pickup 16 is turned on in step S71, so that laser beam 28 is caused to follow the groove 34. Then, in step S72, this optical pickup seeks an area of the data recording layer 36 on which the disk identifying information of allowing the image drawing is recorded. Subsequently, data stored in this area is read in step S73. Then, it is determined in step S74 whether the disk identifying information of allowing the image drawing is present. In a case where the disk identifying information of allowing the image drawing is detected, it is determined in step S75 that a visible image can be drawn on the label surface 12b. Conversely, in a case where the disk identifying information of allowing the image drawing is not detected, it is determined in step S76 that a visible image cannot be drawn on the label surface 12b. Thus, only the recording of data on the data surface 12a is permitted.

<Judging method 2 for disk capable of drawing image>
In this method, a disk identifying mark of allowing image drawing that can be detected by the optical pick-up 16 at the data surface 12a side is formed on the surface of the disk substrate of the data surface 12a side of the optical disk 12 capable of drawing the image. When the optical disk is inserted into the optical disk device 10 (Fig. 1), 111 (Fig. 16), it is judged whether or not the image can be drawn on the inserted optical disk depending on whether or not the disk identifying mark of allowing the image drawing can be read by the optical pick-up 16.

Fig. 26 shows an example of the form of the disk identifying mark of allowing image drawing. Fig. 26(a) shows the structure of the data surface 12a side of the optical disk 12 capable of drawing the image. Fig. 26(b) shows the structure of the label surface 12b side thereof. The structure of the layers of the optical disk 12 is shown in, for instance, Figs. 2 to 4. On the surface of the disk substrate of the label surface 12b side of the optical disk 12, the disk identifying mark 113 of allowing image drawing is formed by printing in black. In this example, disk identifying mark 113 of allowing image drawing is formed with four bars printed at intervals of 90° in the periphery of the central hole 12c. The width of one mark 113 (length in the direction of circumference) is about 1 mm. An area 115 (a mark forming area) in the radial direction for forming the disk identifying mark 113 of allowing image drawing is an area having a radius of 21.0 to 22.0 mm from the center of the disk. The data recording layer 36 exists in this area, however, the area is not recorded, nor reproduced by an ordinary optical disk device. An outer peripheral side (an outer peripheral side from the radius of 22.0 mm) of the mark forming area 115 is a data recording area 117 for recording the data. In the label surface 12b side, an image drawing area 119 for drawing the image is set as an area of the outer peripheral side from a radius of 24.0mm. The mark forming area 119 may be set to a further outer peripheral side (for instance, in the case of the DVD, an area of a radius 22.0 to 24.0 mm, and in the case of the CD, an area of a radius 23. 0 to 25.0 mm).

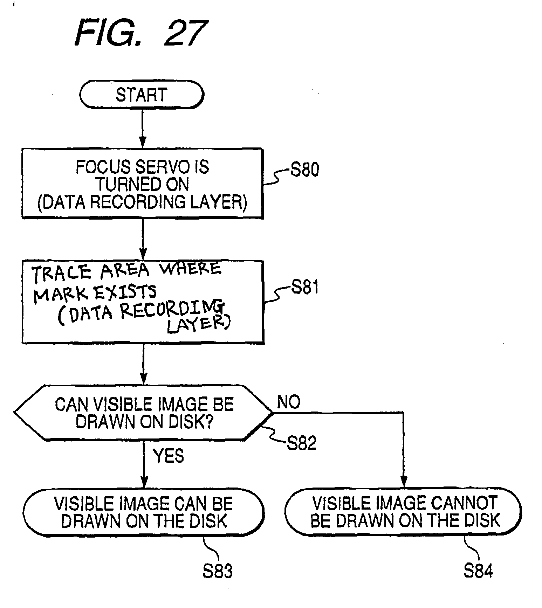

FIG. 27 illustrates a flow of a method performed by the optical disk apparatus 10or 111 to judge, whether a visible image can be drawn on an optical disk in a case where the disk identifying mark 113 of allowing the image drawing is recorded on a data recording layer. When the optical disk 12 is inserted into the optical disk apparatus 10 or 111, the spindle motor 14 is driven, the focus servo 82 (or 82-1) corresponding to the lower optical pickup 16 is turned on in step S80, and laser beam 28 is focused on the data recording layer 36. Subsequently, an area of the data recording layer 36, in which the disk identifying mark 113 of allowing the image drawing is formed, is traced with laser beam 28 in step S81. Then, it is judged in step S82 according to periodical increase and decrease in the amount of reflection light whether the disk identifying mark 113 of allowing the image drawing is present. If the disk identifying mark 113 of allowing the image drawing is detected, it is judged in step S83 that a visible image can be drawn on the label surface 12b. Then, the apparatus awaits a user's instruction to draw a visible image. Conversely, if the disk identifying mark 113 of allowing the image drawing is not detected, it is judged in step S84 that a visible image cannot be drawn on the label surface 12b. Only the data recording of data on the data surface 12a is permitted.

Incidentally, the above embodiments determine the rotation reference position utilizing the position information recorded on the data recording layer. However, the method of determining the rotation reference position according to the invention is not limited thereto. For example, the rotation reference position can be determined by a mark, which is formed at a predetermined position (e.g., a position at the inner circumference side of the disk) on the data-surface-side substrate surface or on the data recording layer can be detected by the data-surface-side optical pickup. Additionally, according to the above embodiments, first, the data recording is performed, and then the image drawing is performed subsequently to the termination of the data recording, or the image drawing is performed simultaneously with the data recording. The manner of performing the data recording and the image drawing according to the invention is not limited thereto. The invention can be applied to a case where only the image drawing is performed regardless of the data recording and the data reproduction.

Although it has been described in the foregoing description of the embodiments that the image drawing layer has no groove, the image drawing layer can have a groove. In this case, a recordable double-sided DVD produced according to DVD standards can be used, and one of data recording layers respectively provided on both sides of this DVD can be used as an image drawing layer. A visible image is drawn on the image drawing layer having the groove, with or without controlling laser beam 30 used for drawing the visible image to follow the groove of the image drawing layer. In a case where an image drawing is performed by controlling the laser beam 30 to follow the groove of the image drawing layer, the arrangement intervals in the disk radial direction of pixels represented by image data is set to be equal to a track pitch (or a groove pitch). In a case where an image drawing is performed without causing the laser beam 30 to follow the groove of the image drawing layer, the stepping motor 26 is driven in synchronization with the rotation of the disk (e.g., the stepping motor 26 is driven by one step every round or every plural rounds), similarly to the above embodiments, and the optical pickup 18 is sequentially moved in the direction of the outer circumference at micro-pitches to thereby cause the image drawing to proceed.

## Claims

1. An optical disk image drawing method of forming a visible image on an optical disk by an optical disk apparatus, the optical disk including a data recording layer and an image drawing layer formed on the data recording layer, the method comprising:
providing first and second optical pickups in the optical disk apparatus, and respectively disposed above and below the optical disk where the optical disk is stored in the optical disk apparatus, the first and second optical pickups are set to be in a fixed positional relation therebetween with respect to a rotating direction of the optical disk, the first optical pickup being capable of recording/reading data is recorded on/from the data recording layer, and the second optical pickup being capable of forming a visible image on the image drawing layer;
rotating the optical disk:
detecting a predetermined rotation reference position from the rotated optical disk by the first optical pickup before an image drawing operation on the image drawing layer is started by the second optical pickup; and
forming the visible image on the image drawing layer by the second optical pickup on the basis of the detected rotation reference position.

2. The optical disk image drawing method according to claim 1, wherein the image drawing operation is started from a position in the rotating direction having a predetermined positional relationship with the detected rotation reference position.

3. The optical disk image drawing method according to claim 2, wherein the forming step includes:
rotating the optical disk by a spindle motor at a predetermined constant angular velocity before the image drawing operation;
detecting FG pulse generating timing of generating an FG pulse from the spindle motor, the FG pulse generating timing being adjacent to reference position detecting timing of detecting the rotation reference position by the first optical pickup; and
starting the Image drawing operation from the FG pulse generating timing or from timing having a predetermined temporal relationship with the FG pulse generating timing, in a state in which the FG pulse generating timing is detected by the first optical pickup by counting the FG pulses and the optical disk is rotated at the predetermined constant angular velocity.

4. The optical disk image drawing method according to claim 2, wherein the forming step includes:
rotating the optical disk by a spindle motor at a predetermined constant angular velocity before the image drawing operation;
detecting a time difference between reference position detecting timing of detecting the rotation reference position by the first optical pickups and FG pulse generating timing of generating an FG pulse from the spindle motor, the FG pulse generating timing being adjacent to the reference position detecting timing;
starting the image drawing operation from timing corresponding to the rotation reference position obtained by correcting, by an amount of the time difference, the FG pulse generating timing, or from timing having a predetermined temporal relationship with the obtained timing in a state in which the FG pulse generating timing by counting the FG pulses and the optical disk is rotated at the predetermined constant angular velocity.

5. The optical disk image drawing method according to claim 1, wherein the rotation reference position is defined by position information which is represented by one of ATIP and a subcode in a case where a data recording format of the data recording layer is a CD format, and the rotation reference position is defined by position information which is represented by one of ATIP, a land pre-pit, and an ECC block in a case where a data recording format of the data recording layer is a DVD format.

6. The optical disk image drawing method according to claim 1, wherein the visible image is permitted to be formed on the image drawing layer on condition that the first optical pickup detects predetermined image identifying information, which allows image drawing, from the data recording layer of the optical disk.

7. The optical disk image drawing method according to claim 6, wherein the disk identifying information is described by one of a subcode, main data, a specific CRC error occurrence pattern, ATIP information, and ADIP information.

8. The optical disk image drawing method according to one of claims 1, wherein the visible image is permitted to be formed on the image drawing layer on condition that the first optical pickup detects a disk identifying mark, which allows image drawing, formed on an area in an inner periphery side from a data recording area on a disk substrate surface at a side that the data recording layer is arranged , or on the data recording layer.

9. The optical disk image drawing method according to claim 1, wherein the image drawing operation is simultaneously or nonsimultaneously performing with the data recording/reproducing operation.

10. An optical disk apparatus for forming a visible image on an optical disk that includes a data recording layer and an image drawing layer laminated on the data recording layer, the optical disk apparatus comprising:
a motor that rotates the optical disk;
first and second optical pickups to be respectively disposed above and below the optical disk, the optical pickups being set to be in a fixed positional relation therebetween with respect to a rotating direction of the optical disk,
wherein the first optical pickup records/reads data on/from the data recording layer and the second optical pickup forms a visible image on the image drawing layer in a state in which the optical disk is rotationally driven by the motor,
wherein the first optical pickup detects a predetermined rotation reference position from the optical disk before an image drawing operation on the image drawing layer is started by the second optical pickup, and
wherein the second optical pickup forms the visible image on the image drawing layer by setting an orientation of the visible image with respect to the detected rotation reference position.

11. An optical disk recording medium comprising:
a data recording layer;
an image drawing layer disposed on the data recording layer; and
a disk identifying mark, which allows an image drawing, formed in an area in an inner periphery side from a data recording area on a disk substrate surface that the data recording layer of the optical disk is arranged, or on the data recording layer, wherein the disk identifying mark is be detected by an optical pickup disposed to face the disk substrate surface.
